# EUROPEAN PATENT SPECIFICATION

(11) **EP 4 415 945 B1**
(45) Date of publication and mention of the grant of the patent: **23.07.2025**
(21) Application number: 22793797.6
(22) Date of filing: 12.10.2022
(51) Int. Cl.: B29C 33/38

(54) **SYSTEM AND METHOD FOR GENERATING A MODEL REPRESENTING A MOULD FOR USE IN MOULDING**
SYSTEM UND VERFAHREN ZUR ERZEUGUNG EINES MODELLS ZUR DARSTELLUNG EINER FORM ZUR VERWENDUNG BEIM FORMEN
SYSTÈME ET PROCÉDÉ DE GÉNÉRATION D'UN MODÈLE REPRÉSENTANT UN MOULE DESTINÉ À ÊTRE UTILISÉ DANS UN MOULAGE

(30) Priority: 12.10.2021 GB 202114597
(43) Date of publication of application: 21.08.2024
(73) Proprietor: Plyable Ltd., Oxford, Oxfordshire OX4 2RD (GB)
(72) Inventor: LOFTS, Adam, Oxford, Oxfordshire OX4 2RD (GB); HUNTER, Luke, Oxford, Oxfordshire OX4 2RD (GB)
(74) Representative: Cooley (UK) LLP
(86) International application number: PCT/GB2022/052583
(87) International publication number: WO 2023/062364

(56) References cited:
- US-A1- 2006 173 566
- US-B1- 6 701 200

## Description

### Field of the Invention

This invention relates to a method for generating an output computer-aided design (CAD) model representing a mould for use in moulding a part represented by an input CAD model. It also relates to a system and computer-readable medium corresponding to the method.

### Background

Moulding has gained popularity worldwide as a manufacturing solution. Its affordability and quick lead times have led to it becoming a mainstay in the plastic, metal, and glass manufacturing industries. It is also a key manufacturing technology for production using many composite materials, such as those based on fibreglass and carbon fibre. With this gain in popularity, the need to provide quick solutions for manufacturers who want to cheaply and quickly turn their designs into commercial products has also increased. With the rise of 3D printing, it has become easier than ever to create a cast for rapidly creating products specific to the design and has allowed more customisation regarding smaller-scale injection moulding.

Current methods of generating a model representing a mould for use in moulding require sending a CAD model to a manufacturer for the manufacturer to develop an understanding of the design to then provide advice on what is needed to manufacture the model, how long it will take to create and the costs involved. The manufacturer will also have to spend time analysing the model to decide the best way for the model to be made before relaying back their suggestions to the client. This is because there are a number of factors that are important in producing a successful mould. These factors include the location of the mould's split line (for multi-part moulds), draught angle, and dealing with small features on the item to be moulded. If these are not adequately addressed, the mould may not allow the item to be produced correctly or to a high enough standard; in some circumstances, it may be impossible for the mould to release the item after moulding. Traditionally, addressing these factors depends on the skill and judgment of an experienced manufacturer. The process of mould design can therefore be lengthy and cumbersome since it relies heavily on the expertise and know-how of the manufacturer to create a good mould for the client.

Hence, there is a need in the manufacturing industry to provide solutions for mould design that can be implemented quickly and efficiently.

Prior art document US6701200-B1 discloses a method of designing the various pieces for molding a part to be molded based on the CAD file of the part to be molded.

### Summary

In a first aspect of the present invention, there is provided a computer-implemented method for generating an output computer-aided design (CAD) model representing a mould for use in moulding a part represented by an input CAD model, the method comprising: generating a mesh over the external surfaces of the input CAD model; analysing the mesh to generate a visibility data structure defining the visibility off each point on the mesh; for each of a group of three orthogonal axes, identifying and selecting, using the visibility data structure, a set of directions such that every point in the mesh is visible from the set of directions in combination; for each direction, defining one or more candidate pieces covering the visible regions of the mesh from that direction; selecting a combination of the candidate pieces which together cover the whole mesh; dividing the combination of candidate pieces about one or more parting lines into a set of shells; and generating the output CAD model to include a set of model parts, each of which corresponds to a respective one of the set of shells and has a surface which conforms to the shape of the respective shell.

This method analyses the input CAD model to create an output CAD model for use in creating the mould. As it is done analytically via a computer system, it greatly reduces the time and expertise required to assess the CAD model for manufacture. The method swiftly outputs a CAD model representing a mould for use in moulding that considers the directions from which the surfaces of the input CAD model are visible to ensure that all faces of the model are properly moulded. The method also determines the best way for the mould to be created and divides the model for moulding into shells to facilitate the splitting of the mould, all done without depending upon the skill and judgement of an experienced manufacturer.

The input CAD model can be stored in any suitable file type. For example, AutoCAD (.dwg), STEP files (.step/.stp), IGES files, or additive manufacturing (.amf) files can be used. CAD files containing the input CAD model can be uploaded to an online or "cloud" storage service.

Open-source libraries such as OpenCascade and CGAL can be used for the loading, meshing and tessellations of the input CAD files. Alternatively, the meshing and tessellation can be done using logic implemented in C++ code. If the input CAD model is a mesh file (e.g. a .obj file), then the meshing of the file is not necessary.

The mesh can be a triangulated mesh or any other tessellated mesh. These meshes have many faces which can be individually categorised and tagged.

The method may further comprise detecting holes in the mesh after generating the mesh. The OpenCascade library can be used to detect any faces that could possibly contain holes using the face classification function and analysing the faces OpenCascade classifies as cylindrical or b-spline. Hole detection can be done by or verified by, for each face in the mesh (or only for the faces found by OpenCascade as a possible hole face), projecting a ray from the centre of the face in the mesh normal to the face out the mesh and tagging the face as a hole face if the projected ray intersects another face in the mesh with a normal within a predefined tolerance of opposite to the projected ray and within a predefined distance, and removing hole face tags from faces that are not in a closed loop of hole faces. A ray can provide the first face it intersects and the point the ray intersects with the mesh. From this, distances and angles between the face normal can be calculated. An example of projected rays can be found at https://doc.cgal.org/latest/AABB_tree/index.html. The centre of the face can be found using a CGAL function for finding the centre of a triangle. This function finds the intersects of the lines from the vertices to the centre of the opposite lines. The predefined tolerance of opposite may be from 165° to 195°, 170° to 190° or 175° to 185° degrees from the normal of the face from which the ray was projected. The predefined distance may be a set distance, e.g. 20mm, or it may be a function of the size of the overall mesh, e.g. 10% of the distance of the total length of the mesh in one of the three axes. The distance is measured using the projected ray, the projected ray returning the distance to its first intersect. A closed loop exists when a face borders at least two other faces tagged with the same tag. If the face exists in isolation (i.e. does not border at least two faces with the same tag), then it is not considered a closed loop. This prevents faces from being erroneously tagged as a hole face. The faces adjacent to faces tagged as hole faces are analysed to find any faces that have been previously classified as conical by the OpenCascade face classification. Of these conical faces adjacent to a hole face, if the conical face is adjacent to at least two other of the conical faces adjacent to the hole faces then the conical face may also be tagged as a hole face. Detecting holes can be useful as they often require drilling out after the part has been machined, increasing the time and effort required to create the model.

The diameter of each hole can be stored for each hole face and can be viewed by a user. The hole diameter is found by finding the first face the projected ray intersects and then establishing the distance that the projected ray has travelled between the faces. It is also possible to establish the angle between the normals of the two faces, which can be used to ensure that the two faces are opposing. The information established in this way can be useful to know the complexity of the mould and for the user to be able to quickly check the mesh has mapped the inputted CAD design properly. It is also useful so that the user can select a suitable size of drill to make the hole in the mould after it is fabricated.

The ray being projected out the centre of the face is projected away from the body of the CAD model. The direction normal to the face is perpendicular to the face on the mesh. The projected ray can be generated by ray tracing, for example as described with reference to the Computational Geometry Algorithms Library (CGAL) at CGAL 5.3 - 3D Fast Intersection and Distance Computation (AABB Tree)
(https://doc.cgal.org/latest/AABB_tree/index.html).

The method may further comprise measuring the distance between vertices on each hole face and tagging the hole face as a deep hole face when the distance between the furthest apart vertices in the hole face is above a predetermined threshold. This predetermined threshold may be a user-specified distance, a set distance (such as 100mm) or a percentage of the overall size of the CAD design, e.g. 10% of the longest axis of the design. This allows a user to better assess the difficulty of the creation of the mould.

The method may further comprise detection of hollows in the mesh after the mesh is generated. Hollows may be any internal volume or void within a CAD model, wherein the internal volume is fully surrounded by the mesh. Surrounded in this instance means there is no way to access the volume from outside the mesh without going through the mesh, hence the internal volume is not visible from any direction outside the part. An internal volume face is therefore one of faces in the mesh that bounds this internal volume. Detecting hollows in the mesh may comprise projecting a plurality of rays from the centre of each face, each ray being projected along a respective one of a plurality of directions, selecting those faces for which all the projected rays intersect other faces in the mesh and tagging the selected faces as internal volume faces. Detecting hollows allows for a determination of the complexity of the mould which is required and of the work involved in reproducing the CAD model. The plurality of rays may comprise more than 100 rays, more than 200 rays or more than 300 rays, for example 343 rays per face may be used. To be tagged as an internal volume face, all rays must typically intersect another part of the mesh. The different angles are selected to provide an even spread of rays from the centre of the face. Hence, the angular difference between rays is dependent upon the number of rays used to analyse the surface. This creates a hemisphere of projected rays from the surface of the mesh from the point analysed.

The method may further comprise detection of gaps in the mesh smaller than a predefined size, by projecting a ray normal to and from the centre of every face except those that have already been tagged as a hole face and measuring the distance to a first intersected face, and tagging the face from which the ray was projected as a narrow gap face when the distance is below the predefined size. The predefined size may be 4mm or a minimum size achievable with a predermined tool to be used to machine the part. Faces previously tagged as hole faces cannot be tagged as narrow gap faces and can be excluded from the narrow gap detection. A warning can be shown if greater than a predetermined number of faces are tagged as narrow gaps. This predetermined number can be, for example, 3. As with deep holes, this allows the user to better assess the difficulty of the creation of the mould, as narrow gaps are difficult to machine.

The method may further comprise detecting walls in the mesh that are thinner than a predefined thickness, by projecting a ray from each face normal to the face into the mesh and measuring the distance the projected ray travels to the first face the ray intersects and tagging the face from which the ray was projected as a thin wall face when the distance is below a predetermined threshold. This predetermined threshold may be 4mm, **standard for the materials used.** The angles of each face can also be compared as the face intersected has been identified and each face's normal is known. The tagging of the face as a thin wall face may also depend on the angle being below a predetermined threshold. The predetermined threshold may be 175° to 185°, 170° to 185°, 170° to 190°, 165° to 195° or other preset angles. It is beneficial to find thin walls as they may break apart during or after manufacture. This allows for decisions to be made regarding what materials or techniques to use when creating the CAD model.

The method further comprises detecting internal corners in the mesh by detecting all edges in the mesh (which can be done using inbuilt CGAL functions) and for each detected edge in the mesh, projecting rays from the centre of each of a pair of faces either side of the detected edge normal to the face, and tagging the face as an internal corner face when both rays intersect with other faces in the mesh. Rays may only be fired out of the centre of each of the two faces either side of an edge if it is the faces are within a set angle, such as greater than 88°. This can be calculated as the normal of each face are known.. Detecting internal corners allows the user to assess the difficulty in creating the mould due to the difficulty in creating internal corners in mould manufacturing.

A bounding box may be generated around the mesh. From this bounding box, the size of the CAD model in each of the three orthogonal axes can be found. The volume of the bounding box is also found and stored. These measurements may be stored in an nbd model class, the nbd model class for datastore objects and properties for models. This allows the user to know the size of the mould, the total weight and the materials required.

The surface area of the mesh may be found and stored. The total surface area may be found, and the total planar surface area may be found separately. This allows the user to know the size of the mould and the materials required, and comparing the two measurements provides an indication of the complexity of the mould. The less planar surface area compared to total surface area, the more complex the mould.

An estimated lead time can be calculated based on the dimensions and other properties previously stored, and further factoring in the different tags the mould may have been given. The lead time is the total time to create the product and will affect the cost of production. The estimated lead time may also be based on the material to be used and the type of sealing chosen for the mould.

Generating the visibility data structure may comprise for each orthogonal axis (i.e. for the x-axis, y-axis and z-axis), constructing polylines around the perimeter of each of a plurality of cross-sectional slices taken through the mesh, the cross-sectional slices being perpendicular to the orthogonal axis. Polylines are connected sequences of line segments created as a single object around the periphery of the mesh at the point it is sliced. The number of cross-sectional slices taken may be a function of the size of the bounding box, and can be evenly spaced through the model. Alternatively, a pre-set number of slices may be taken and the distance between slices is a function of the bounding box. For example, three slices may be taken, one down the middle and the other two slices taken equally spaced in either direction towards the edges of the bounding box, i.e. at quarter and three-quarters through the bounding box. A standard CGAL function, CGAL::Polygon_mesh_slicer, can be used to create the cross-sectional slices through the mesh by taking the plane in which to slice the mesh and filling a vector of polylines with the polylines of this slice. It is possible to have more than one polyline for a single cross-section. For example, if taking the cross-section of a torus, two polylines would exist for the cross-sectional slice down the middle of either the x or y axes. For each vertex along the constructed polylines, analysis can be carried out for every angle from 0° to 360° in stepwise increments of 1°, relative to the orthogonal axis down which the mesh has been sliced to create the polyline(s), to determine the angles from which the point is obscured by other points in the polyline or by another polyline. This can be done by taking the coordinates of each point in the polyline in turn and calculating the angle between it and each other point in the polyline. The calculated angles are then used to determine vectors between the original point and each other point on the line. Using these vectors and by stepping along the points of the polyline in a known direction (e.g. clockwise), it is possible to calculate using standard geometrical techniques the range of angles from which the original point is visible. The analysis may be done at smaller- or larger-angled increments. The use of 1° increments generally provides an adequate level of detail without requiring lengthy processing. The method may further comprise defining, in the data structure, the visibility of each point on each constructed polyline for every angle from 0° to 360° as either visible or obscured, wherein the visibility of each point from each angle is dependent upon whether the analysis found the angle from the point was obscured by other points in the polyline or another polyline. This is done for all polylines created for each slice in that axis and repeated for the other two orthogonal axes. The visibility can be stored in the data structure as either visible or obscured, and the angles from which the mesh is visible can be stored as vector pairs in the data structure. This provides information on the visibility of the entire mesh that can then be used to decide directions from which every point in the mesh is visible.

The identifying and selecting, using the visibility data structure, a set of directions from which every point in the mesh is visible for each axis may comprise identifying all 0° to 180° and 180° to 360° pairs of angles from which every vertex on every analysed polyline for each axis is visible in combination and adding the pairs to a group; identifying all 0° to 120°, 120° to 240°, 240° to 360° triplets of angles from which every vertex on every analysed polyline for each axis is visible in combination and adding the triplets to the group; receiving a user-input defining the number of shells wanted for the mould; and choosing, from the group, based on the number of shells wanted for the mould, the combination of angles closest to 0°, 90°, 180° or 270° for each orthogonal axis. Instead of receiving a user-input defining the number of shells wanted for the mould, the method may return the fewest number of shells required to create the mould, which would correspond to the fewest angles required to view every part of the model. The chosen directions from the set of possible directions are called the pull directions, which are 180° from the angles initially found to combine to view every point on each polyline for each axis. These pull directions are directions in which a mould can be separated from a part moulded within it by pulling the mould away from the moulded part.

A pair of angles can be any combination of angles where the first lies between 0° and 180° and the second lies between 180° and 360°. The split around 180° helps reduce the calculation time and encourages opposite angles to be found which is preferable when creating the mould. As the angles are checked stepwise in 1° increments, there are therefore 32,400 possible pairs to analyse the visibility of. The group will only contain the combinations from which every point is visible in combination, but this may still be a large set of possibilities. Hence, a function can be run to find pairs that correspond to the vertical axes for the polyline. If there are no pairs directly corresponding to an axis pair, then the angle pair closest to the vertical axis angles (0° and 180°) are chosen.

The method may further comprise rotating the mesh such that the set of directions chosen can be represented by a vector. This can be done by rotating the mesh by an angle related to the direction angle of the pair chosen from the set. For example, an angle pair of 90° and 270° can be represented by the vectors (0, 0, 1) and (0, 0, -1) when looking at slices perpendicular to the x-axis or y-axis. The rotation of the mesh allows for the directions chosen to be represented by these vectors. These vectors can then be stored in the visibility data structure.

The method may further comprise finding visible faces on the mesh for each direction in the set of directions; wherein finding visible faces on the mesh comprises finding faces with a normal with an angle within a predetermined tolerance (for example, within 3°) of the direction from the set of directions; projecting rays from the centre of these faces in the chosen direction to analyse whether the face is obstructed by another face in the mesh in the chosen direction; tagging those that are not obstructed as visible faces; and identifying faces not tagged as a visible face but are surrounded by visible faces and tagging these faces as isolated faces. Surrounded means all edges of the face border only faces tagged as that type. This indicates the accessibility of the face from each of the directions in the set of directions that will be used when creating the mould pieces. It is possible to classify each face with respect to a given direction from the set of directions as visible, backfacing, obstructed, isolated and convex. Visible means the ray is not intercepted and can be seen from the direction chosen. Backfacing means that the face is facing the opposite direction to the direction being analysed so is not visible. Obstructed is where the face is not backfacing but is obstructed by another face in the mesh in the direction chosen. Isolated faces are not initially seen as visible but are surrounded by visible faces so are most likely visible, so finding these prevents erroneous faces from being tagged as not visible in the chosen direction, often caused by poor meshing of the CAD model. Hence, visible faces comprise faces tagged as visible and isolated.

The method may further comprise rotating the rays projected from the centre of faces in the mesh with a normal within a predefined angle, preferably 3°, of perpendicular to the direction from the set of directions, towards the direction from the set of directions, to create an angle between the normal and perpendicular to the direction from the set of directions greater than the predefined angle. This prevents faces that are visible being seen as not visible during visibility analysis, allowing models with a depth in the pull direction to be analysed correctly.

The method may further comprise defining the candidate pieces by merging connected visible- or isolated-tagged faces. As this is done for each orthogonal axis, each candidate piece has its own direction associated with it.

The method may further comprise removing letterbox pieces. Letterbox pieces are candidate pieces which would not be reasonably made in real life and are removed from candidate piece consideration. Letterbox pieces are normally very thin, long moulds which would be difficult to manufacture. These may be detected by analysing the candidate pieces the candidate pieces with bounding boxes much larger in one dimension than the other two, for example, two times or more the length of the next longest dimension. The scalar projection of the piece's largest dimension is compared with the scalar projection of the pull direction. If the scalar projection of the piece's largest dimension compared to the pull direction is over a predefined limit, for example 0.95, then the piece is tagged as a letterbox piece. The scalar projection is the dot product between a vector of the dimensions of the piece (i.e. its size in each of the x-, y- and z-planes) with the pull direction (which will be a unit vector).

The method may further comprise analysing the mesh to find faces with a normal within the minimum angle required for the part to be machined and removable from moulds, typically 2°, perpendicular to the direction in the set of directions and alerting the user if found. The difference between the direction in the set of directions and the normal of the face is called the face draft. Poor drafts (i.e. faces with a normal less than the minimum angle required for a part to be machined and removable from a mould to perpendicular to the direction from the set of directions) can cause issues when creating the mould as they may catch when removing the mould from the cast.

Selecting a combination of the candidate pieces which together cover the whole mesh may be done from a pool of possible combinations of candidate pieces. As the analysis for candidate pieces is done for each set of chosen directions, and each set of chosen directions is unique to the axis through which the plurality of cross-sectional slices were taken, it is likely there will be multiple possible combinations of candidate pieces which together cover the whole mesh, each with their own set of directions. Hence, selecting the combination of the candidate pieces which together cover the whole mesh may comprise taking the dot products for a two piece solution or the triple scalar product for a three piece solution of the direction from the set of directions associated with each candidate piece with every other direction associated with every other candidate piece that together cover the whole mesh and selecting the combination of candidate pieces which result in the lowest dot product or triple scalar product. As there will likely be several possible combinations of candidate pieces that together cover the entire mesh, the most preferable candidate pieces are those with pull directions as close to opposite directions to each other as possible, as this is most likely to create a good mould covering all faces and provide easily pulled apart shells. The candidate pieces with their associated pull directions being as close to opposite to each other as possible can be found by taking the dot product or triple scalar product of the pull directions associated with each candidate piece. The set of candidate pieces that cover the entire mesh with the lowest dot product or triple scalar product can then be returned, or other options can be given to the user including the single-piece solution.

Instead of or as well as using the dot product/scalar triple product, the pull direction may be compared with the scalar projection (a vector spanning the largest distance within the bounding box of the model, typically from furthest diagonal point to furthest diagonal point), which returns the solution with the least letterbox pieces. This provides another level of refinement to choosing the optimum solution if there are multiple solutions with the same dot product or triple scalar product. As the pull direction is always a unit vector, this comparison provides the relative length of the box. The shorter the length, the less "letterbox" the solution, so shorter vectors spanning the bounding box are desirable.

A user may be presented with possible combinations of candidate pieces from which to create shells, along with different options regarding the number of shells (i.e. if the user would like the mould to be a single-piece mould, a two-piece mould or a three-piece mould). The chosen candidate pieces are labelled as mould solids and the combination of these mould solids provides the overall mould solution. The method then includes displaying different lead times for each solution depending on the complexity of the output CAD model.

Thin CAD models can be made by turning a two-piece mould (i.e. visible from the top and bottom) into a single-piece mould. This can then be manufactured through layering the material (e.g. carbon fibre) on top of the mould rather than via injection moulding. This can be done by taking each piece of a two-piece mould individually. The selection of which of the two-piece mould solution to use can either be user-selected or the largest single-piece solution (the solution with the most faces) can be automatically selected.

The method may further comprise removing faces from one of the candidate pieces that is common with other candidate pieces and generating a standard parting line where the candidate pieces meet. This "trimming" is done so there is no overlap between the candidate pieces that make up the final mould shells. One of the candidate pieces may be trimmed to be a male piece - where there is overlap between two shells, one is trimmed and that is designated as the male piece. This can include removing the side faces to prevent overlap, or removing side faces in a single-piece solution to create a male piece as the depth is not required when creating from a single mould (the depth is created by the layering of carbon fibre layup or other material used). The male mould piece has extending joins that fit in the other shell(s). This allows the shells to slot together neatly when creating the mould.

The hole faces and/or cutouts (large sets of faces overlapping at least two candidate pieces that will be cut out of the mould after machining, rather than being machined out like holes) in the candidate pieces may be removed from the candidate piece to demonstrate the final product. The removal also prevents adding unnecessary depth to the candidate pieces.

The method may further comprise generating the standard parting line. For a single piece solution, the parting line is the largest edge of the mould so the lengths of all edges are compared. The generated standard parting line provides a clear boundary where the mould ends and also provides the edge from which to extrude from.

Parting lines may be identified as either a standard parting line (as described above), or a hole parting line (the edge created from removing the hole faces previously) or a cutout parting line (the edge created from removing the cutouts previously). This can then be displayed to a user, each type of parting line in a different colour to clarify which type of parting line is present. A user would want to know how the mould will be produced and this provides information about how the mould is formed and the holes and cutouts are removed after the mould has been machined. If a hole goes all the way through a part and multiple candidate pieces in a mould solution, parting lines around this hole need to be displayed for each mould piece.

The method for making a mould may comprise generating an output CAD model using the method as described above and operating a reproduction device to produce the mould represented by the output CAD model.

The method for making a mould may comprise generating an output CAD model using the method as described above and creating a cast to produce the mould represented by the output CAD model.

In a second aspect of the present invention, there is provided a system comprising at least one processor coupled to a memory, the memory containing instructions which, when executed on the processor, cause the processor to perform the steps of the method of at least the first aspect of the present invention provided above.

In a third aspect of the present invention, there is provided a computer-readable medium containing instructions for execution on at least one processor, the instructions causing the processor, when executed, to perform the steps of the method at least the first aspect of the present invention provided above.

The mould may be generated from the output CAD model. Generating the mould comprises: generating a moulding region for each candidate piece;for each moulding region, filling in gaps in a mesh formed over the surface of the moulding region; extending the boundary of the moulding region tangential to its surface by lofting the boundary towards a straight skeleton formed from it using corresponding vertice on each of the boundary and straight skeleton; and extruding the surface along one of the chosen directions. The extruded surface may be clipped along a plane normal to the chosen direction.

### Brief Description of the Drawings

Embodiments of the invention will now be described with reference to the accompanying figures in which:
Figure 1 shows a flowchart of the method for generating a model representing a mould for use in moulding.
Figure 2 shows an exemplary model described by an input STEP file.
Figure 3 shows the example from Figure 2 having had a polyline drawn around its perimeter at the middle of its y-direction cross-section.
Figure 4 shows the use of projecting rays to find the visibility of each point on the polyline to populate a visibility data structure.
Figure 5 shows the projected rays for a toroidal shape being obscured by another polyline drawn around another part of the toroid.
Figure 6 relates to the technique used for finding the combination of directions from which the entire polyline is visible.
Figures 7a and 7b relate to the categorisation of a face as backfacing.
Figures 8a and 8b show an example of rotating a face when its normal is perpendicular to the chosen direction.
Figure 9 shows an example projected ray that would flag a face as obstructed.
Figure 10 shows example isolated faces from poor meshing.
Figure 11 shows a letterbox piece that would not be suitable to use as a solution.
Figure 12 shows an example face with a small draft and an example alert due to this.
Figures 13a and 13b show the shells being trimmed.
Figure 14 shows the generation of a parting line.
Figure 15 shows the generation of a mould solid.
Figure 16 shows the triangulation of holes and cutouts in the moulding region.
Figures 17a and 17b show the extending of a boundary of the moulding region tangent to a surface outward.
Figure 18 shows the faces of a surface being lofted using opposite vertices.
Figure 19 shows faces extruded in the z-direction being clipped.
Figures 20a and 20b show a surface being extruded along a pull direction.
Figure 21 shows a system suitable for implementing a method according to the invention.

### Detailed Description of the Embodiments

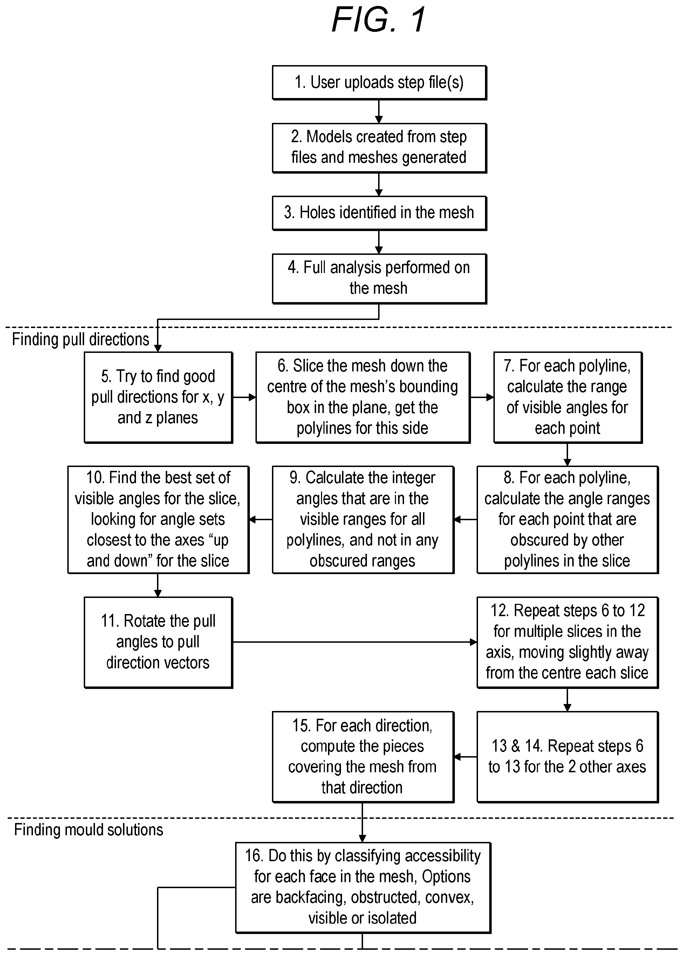

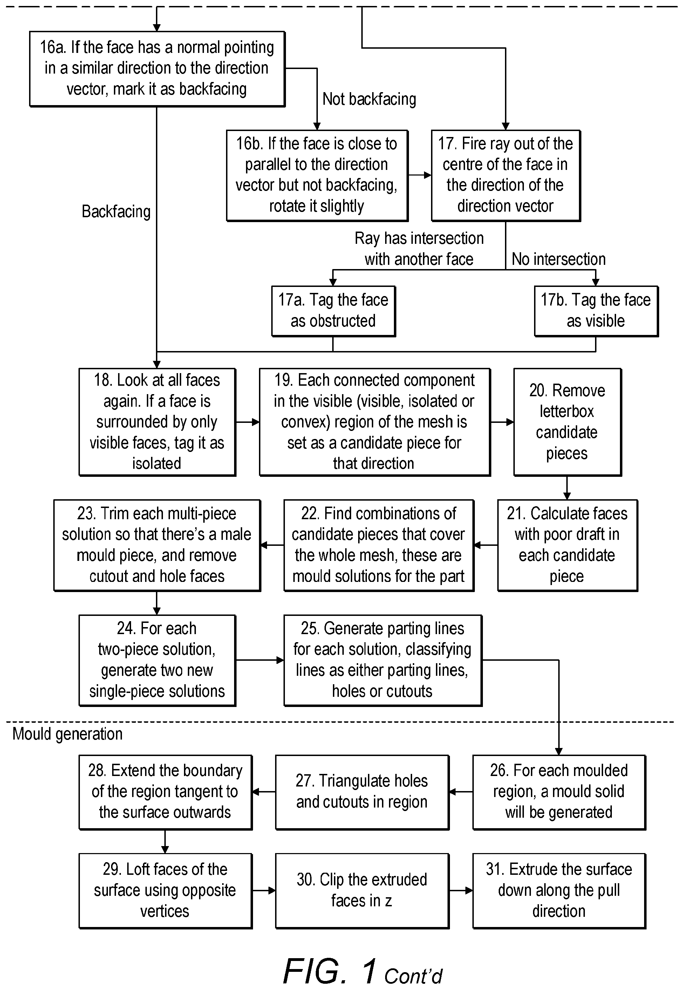

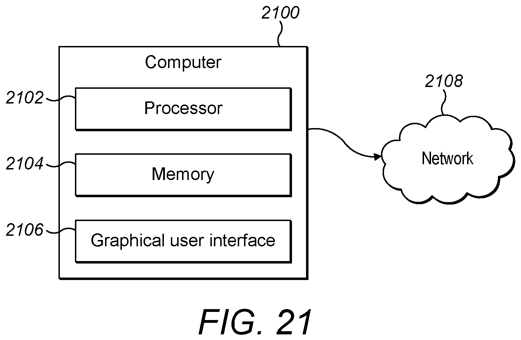

Figure 1 shows a flowchart of a method for generating a model representing a mould for use in moulding. The method may be carried out using a computer system such as that shown in Figure 21 and described below.

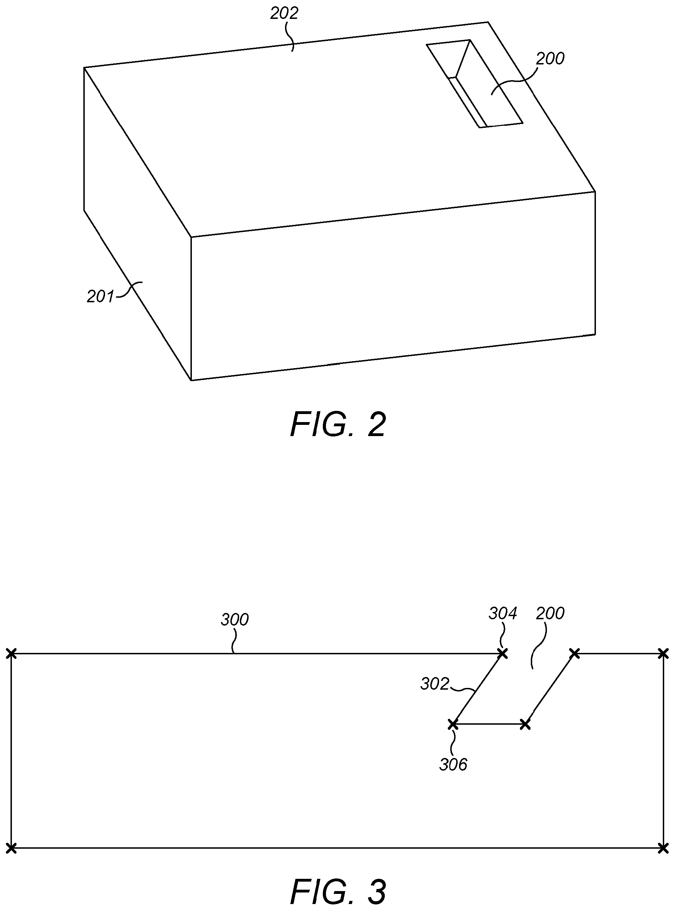

In step 1 of Figure 1, the user uploads a STEP file or files. This file may be stored in a cloud storage facility from where it can be retrieved over the Internet by the computer system on which the method is carried out, or it can be stored locally to the computer system. Figure 2 shows an example model described by the STEP file. The model is of a cuboid 201 with a trough 200 in an upper surface 202 of the cuboid 201.

In step 2, the model of the cuboid 201 is created from the description in the STEP file that has been uploaded and meshes are generated over each face of the cuboid 201. Standard open source libraries OpenCascade or CGAL may be used for loading the STEP file describing the cuboid 201 and for creating the meshes. Alternatively, the model loaded from the STEP file may be meshed and tessellated using proprietary functions.

Once the meshes have been generated, holes in the faces are detected in step 3. Holes are detected so that they can be drilled out after the mould has been fabricated. The four stages to hole detection are as follows:
a. First, OpenCascade is used to relate the faces of the mesh to the surfaces of the input CAD model, and face classifications are used to detect any faces that could possibly contain holes. This includes faces classified as b-spline and cylindrical - see https://dev.opencascade.org/doc/refman/html/class_geom___surface.html) for a list of possible classifications using OpenCascade.
b. A ray is then projected from the centre of those faces that are identified as possible containing a hole in the direction of the face's normal. If this ray intersects with another face in the mesh with a normal nearly opposite to the face's normal, and if the two faces are close enough together, then the face could be a hole face. If the intersected face is not opposite or is too far away, the original face is no longer tagged as possibly containing a hole.
c. All faces which are still tagged as a hole are analysed and any that are not in closed loops of hole faces have their hole tags removed. CGAL gives adjacent faces, already know hole faces, compare to find.
d. The faces adjacent to faces tagged as hole faces are analysed to find any faces that have been previously classified as conical by the OpenCascade face classification. Of these conical faces adjacent to a hole face, if the conical face is adjacent to at least two other of the conical faces adjacent to the hole faces, then the conical face may also be tagged as a hole face. Conical faces are detected when the OpenCascade face classifications are used in step a.
The value of the diameter of the hole is stored for each face in which a hole is detected, so that the hole diameter can be viewed by the user.

In step 4, a detailed analysis is carried out on the mesh. This detailed analysis comprises six steps:
a. Hollow volumes in the mesh are detected. This is done by projecting rays from the centre of each face in a mesh in a large number of directions. If all of these rays intersect with other faces in the mesh, the face is tagged as an internal volume face since it is not visible from any direction outside the mesh.
b. Narrow gaps are detected. This is done by projecting a ray from the centre of each face and measuring the distance to the nearest intersected face. Faces which have already been tagged as containing a hole cannot be narrow gap faces. If the nearest intersected face is within a predefined distance, the face from which the ray was projected is tagged as forming a narrow gap.
c. Thin walls are detected. This is done by projecting a ray from the back of each face and checking if the nearest intersected face is within distance and angle bounds. Faces that have been tagged as hole faces are ignored and are not tagged as thin wall faces. This is because holes are often drilled out after the part has been machined, meaning the issues that arise from machining thin walls do not apply.
d. Deep holes are detected. This is done by analysing the distances between the vertices on hole faces and taking the longest length between two vertices. If the length is over a set bound, such as 100mm, the face is tagged as having a deep hole. This step is only performed on faces that have already been detected as containing a hole.
e. Internal corners are detected. This is done by measuring the angle between the faces either side of each edge in the mesh. If the measured angle is within a set tolerance, rays are projected from the centre of each of the two faces forming the angle in the direction of their 16iving. If both rays intersect with other faces in the mesh, the edge is tagged as an internal corner, including if they intersect with the other of the two faces.
f. A bounding box is generated around the mesh using standard OpenCascade functions, and from this the size of the part in the x-, y- and z-directions, the direction of the bounding box axes and the volume of the bounding box are generated and stored. Surface areas such as total surface area and total planar surface area are calculated and stored.

In step 5 of Figure 1, the method involves trying to find good pull directions for the x-, y- and z-planes. The directions are those from which every part of the CAD model is visible. For the example model in Figure 2, this means finding a direction that the trough 200 is fully visible. The part of the mould that projects into the trough 200 can be removed from the trough 200 by pulling it along the pull direction. If it is pulled in another direction, the mould is likely to interfere with the trough 200 and prevent it being released.

In step 6 of Figure 1, the mesh is sliced down the centre of its bounding box in the plane (in the first of the x-, y- or z-planes) to generate polylines for the slice. A CGAL mesh slicing function is used
(https://doc.cgal.org/latest/Polygon_mesh_processing/classCGAL_1_1Polygon__mesh__slic er.html#abd67ea7ecable4bdaafe490f0d8e0324) and this fills an empty vector to hold the polylines for the slice. Figure 3 shows one of the polylines 300 for Figure 2 when sliced in the y-direction. Polylines are connected sequences of line segments, and the line segments here are drawn from vertex to vertex. The line segment 302 drawn between the vertex 304 and other vertex 306 follows the shape of the trough 200.

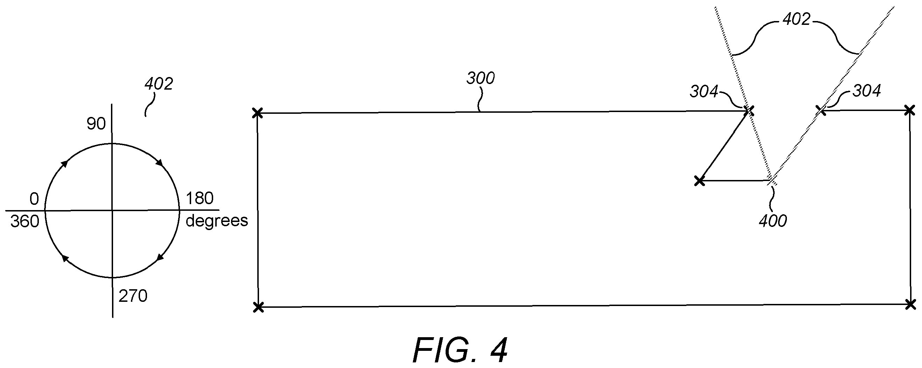

In step 7, for each polyline such as that in Figure 3, the range of visible angles for each vertex along the polyline is calculated. As the input CAD model has been meshed, curved lines will be represented by small lines with lots of vertices. To calculate the range of visible angles for each vertex along the polyline, each vertex on the polyline is analysed and the range of angles from which each point is visible is found by projecting rays from each vertex to every other vertex in the polyline, and analysing whether the rays intersect other points in the polyline. This provides the visibility of every vertex on the polyline without excessive processing power. This can be seen in Figure 4, where the vertex 400 has rays projected to vertices 304 and 404 (and the other vertices, not shown), and establishes that vertex 400 can be seen from the range of angles between the two projected rays 402. The range of angles that the vertex 400 is visible from is calculated independent of the chosen point on the polyline; instead the angles 402 are measured in relation to the angles around the axis through which the mesh has been sliced to create the polyline . The vertex 400 in this example is visible from 80° to 135°, whereas the vertex 304 is visible from 0° to 180°.

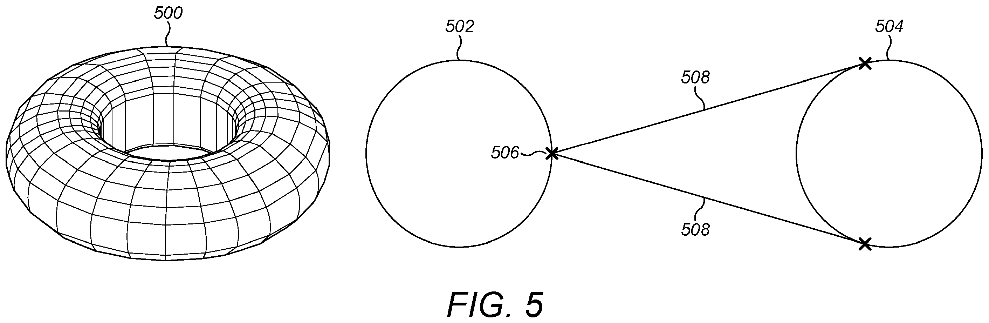

In step 8 of Figure 1, for each polyline, the angle ranges for each point that are obscured by other polylines in the slice are calculated. Figure 5 shows an example of a toroidally-shaped model 500 described by an input CAD file. In this model, the slice through the y-axis of the toroid can be seen as two separate polylines 502, 504. As can be seen in Figure 5, the point 506 on polyline 502 is obscured by the polyline created by the other side of the doughnut 504 between the projected lines 508. Hence, the point 506 is obscured for the angles 160° to 200° by the other polyline, and this is recorded in the data structure.

Step 9 of Figure 1 involves calculating, for each point on the polyline, the integer angle values that are in visible ranges determined in step 7 for all polylines and not in any obscured ranges determined in step 8. To generate good mould solutions, sets of pull directions are needed where every point in each polyline is visible from one or more of the pull directions in the set of pull directions. This is found by looping over every integer angle degree relative to the axis currently being analysed and looking for any that cover every point in the polyline. Pairs of angles are then looked for that together cover every point, then sets of three that cover every point on the polyline. It may be possible or required to have more than sets of three angles to view every point, however the vast majority of cases have solutions of three or less angles. Due to the increase in complexity and cost with each mould piece required, it is preferred to have as few angles to view the entire model from as possible. Each angle found is associated with a particular pull direction of the mould.

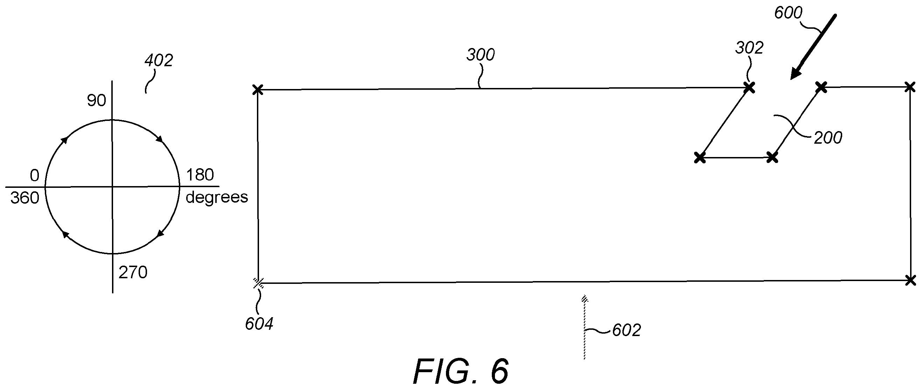

Step 10 of Figure 1 involves finding the best set of visible angles for the slice, looking for angle sets closest to the 90° and 270° for the slice. An example of what is done in step 10 is shown in Figure 6 in which the CAD model of Figure 2 is reproduced. The minimum set of angles from which every point in the polyline is visible, preferring those closest to 0°, 90°, 180° or 270° (corresponding to the axes), are looked for. A simple function comparing the angles to the axes can be used to find the angles closest to these angles. Two pull directions are needed for every point on the polyline of Figure 6 to be visible, and generally there must be sufficient pull directions so that all points can be seen from the set of pull directions in combination. The possible pull directions from step 9 are passed through a function that returns the best possible set of pull directions for the slice. The function first looks for angle sets that have at least one of the angles at 90° or 270° and returns them if they exist. If no such angle set is found, the angle set closest to 90° and 270° is returned. This function returns sets with the minimum number of pull angles for the slice. To be able to see all points in the trough, the pull direction 600 is needed. This angle ensures that the model shown in Figure 6 will be properly constructed from the mould as all points along the upper edge polyline 300, the trough 200 and the right-hand side of polyline 300 are visible from pull direction 600. The vertex 604 is not visible from the pull direction 600 so another pull direction is required to see every point on the polyline. Pull direction 602 is chosen as it is closest to one of 0°, 90°, 180° or 270° while ensuring the vertex 604 is visible.

In step 11 of Figure 1 the pull angles are converted to pull direction vectors. The angles found in step 10 are converted from an angle set (e.g. 90°, 300°) to a set of pull direction vectors. This is done by rotating axis vectors by an angle related to the pull direction angle, so that the pull direction angles can be represented by a vector. For example, if an axis vector is taken that is on a slice, such as (0, 0, 1) on the slice in the x-plane, this is rotated by an amount corresponding to the angle found in step 10, to get the pull direction. For slices in the x- and z-planes, the axis vector is rotated by (90° - the angle found in step 10), and for the slice in the y-plane the axis vector is simply rotated by the angle found in step 10. In the example shown in Figure 6, for the slice in the y-plane, we can rotate the axis direction of (1, 0, 0) around the normal to the slice (which is (0, 1, 0)) by the angle found in step 10 to get the pull direction.

In step 12 of Figure 1, steps 6 to 12 are repeated for other slices taken along the axis, moving in both directions away from the centre in increments with each new slice. Each slice is evenly spaced across the part, so there will always be an odd number of slices taken. Preferably three slices are taken as this balances speed of analysis with accuracy of the visibility data structure. The spacing for the slices is calculated from the size of the bounding box created earlier. One slice can be taken for quick analysis and for models known to have a constant cross-section.

In steps 13 and 14 of Figure 1, steps 6 to 12 are repeated for the other two axes not yet analysed. This ensures all directions are analysed through the previous steps to find the optimal pull directions. At this point in the method, all slices of all axes have been analysed so the visibility data structure has been fully populated (steps 6 to 9). From this fully populated visibility data structure, suitable sets of pull directions have been found for each axis (steps 10 and 11).

In step 15 of Figure 1, the faces covering the mesh from each direction are computed. A suitable set of pull directions (6 pull directions, 2 for each axis) has been calculated, and each face can be classified with respect to each of these directions. Each face can be classified to more than one direction if it is visible from more than one direction. Accessibility is the property used to classify how each face is visible from a given pull direction. As can be seen from Figure 1, this classification process starts in step 16, each face being allocated a classification in the mesh as backfacing, obstructed, visible or isolated. This is done for each pull direction.

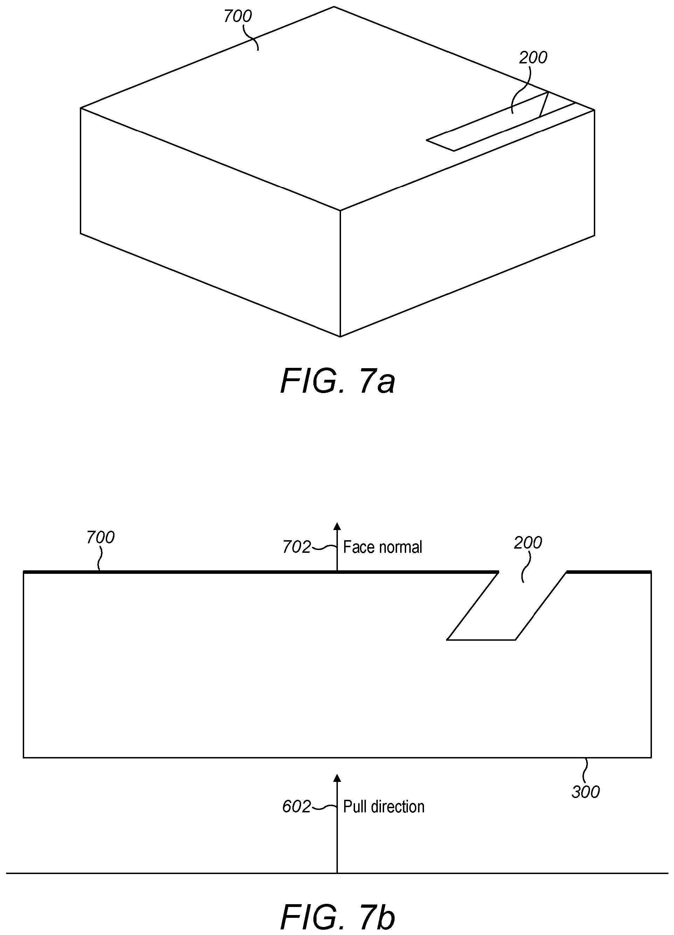

In step 16a of Figure 1, if a face has a normal pointing in a similar direction (preferably within 3°) to the pull direction vector, it is marked as backfacing. This is further exemplified in Figures 7a and 7b, which show a variation of Figure 2 having the top face 700 marked backfacing with respect to the pull direction 602 chosen. The normal 702 of the top face 700 is close to the same as the pull direction 602, so the face cannot be visible from that direction. The face is therefore marked as backfacing.

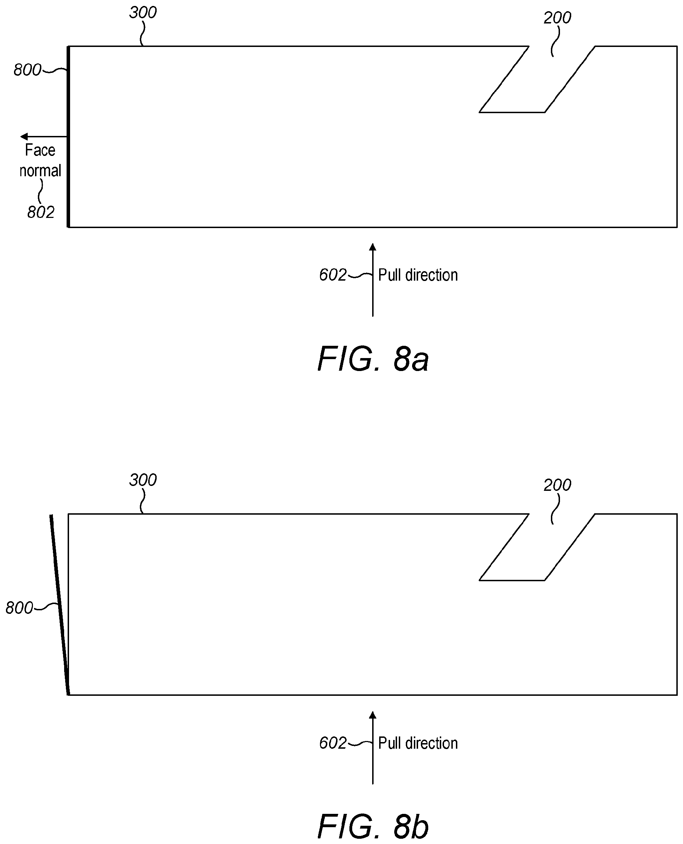

In step 16b of Figure 1, if the face is close to parallel (and so its normal is close to perpendicular) to the pull direction but not backfacing, the angle from which the rays are projected from the centre of the face is rotated slightly, for example by 3°. This can be seen in Figures 8a and 8b, where the face 800 is parallel to the pull direction 602 and therefore has a normal 802 perpendicular to the pull direction. This face 800 is "rotated" towards the pull direction, so the rays projected from the centre of the face project at an angle closer to the direction in the set of directions, giving the face more of a chance to be visible from the chosen direction. This avoids losing faces that are invisible from the pull directions but should be considered visible. This allows for depth of moulds to be properly assessed.

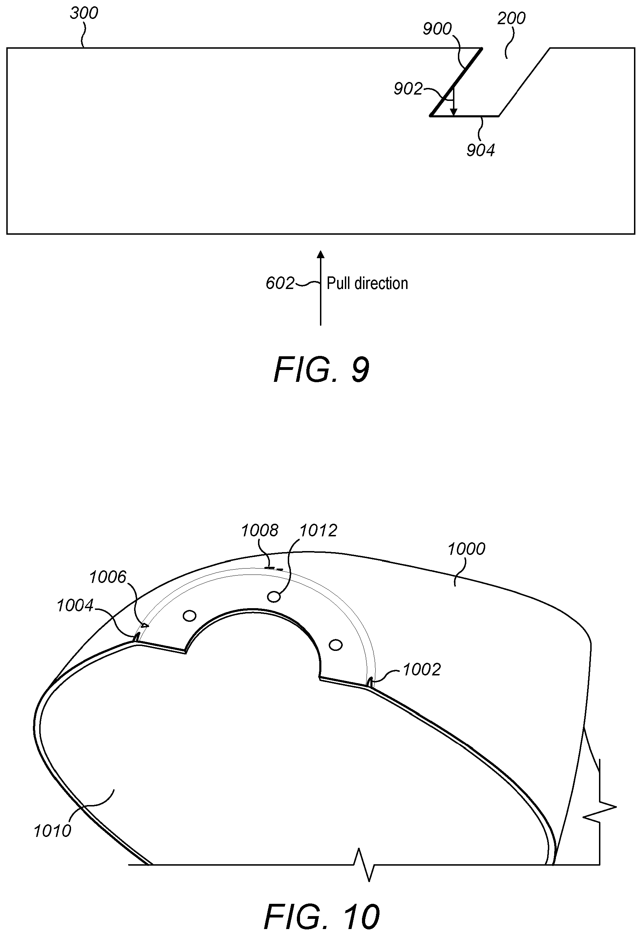

In step 17 of Figure 1, a ray is projected from the centre of any face not marked as backfacing in the direction opposite to the pull direction. This is done using a CGAL AABB tree function (https://doc.cgal.org/latest/AABB_tree/index.html). Intersections between this ray and any other face in the mesh are looked for. In figure 9, a ray 902 is projected from the centre of face 900 in the direction of the pull direction 602.

In steps 17a and 17b of Figure 1, it is determined whether the ray has intersected with another face in the mesh. If it has, the face is tagged as obstructed in step 17a. If not, the face is tagged as visible in step 17b since it is visible with respect to the pull direction the accessibility of the faces of the mesh is currently being analysed for. Figure 9 shows the ray 902 intersecting the face 904, owing to which the face 900 is tagged as obstructed.

In step 18 of Figure 1, all faces in the mesh are looked at again, and if a face has been tagged as backfacing or obstructed and are surrounded only by visible faces, it is tagged as isolated. This replaces their previous tag of either backfacing or obstructed. Finding these prevents erroneous faces from being tagged as not visible in the chosen direction when they should be - this can be caused by poor meshing of the CAD model. Isolated faces are seen as visible, along with faces tagged as visible, when analysing the faces visible from each pull direction. Figure 10 shows an example part, with surface 1000 being visible and surface 1010 not being visible from the chosen direction. Faces 1002, 1004 are not tagged as visible faces even though they should have been. This is likely due to poor meshing of the curve of of the part, meaning the faces end up being classified as obstructed as the projected rays from each face interact with another face in the mesh. These faces 1002, 1004, 1006 and 1008 border only visible faces so are tagged as isolated faces.

In step 19 of Figure 1 shows each face visible from the pull direction (i.e. each face tagged as either visible or isolated) bordering other faces visible in that pull direction are grouped into a single candidate piece for that direction. The mould solutions will be constructed from these candidate pieces. Different candidate pieces can be selected to create different mould solutions.

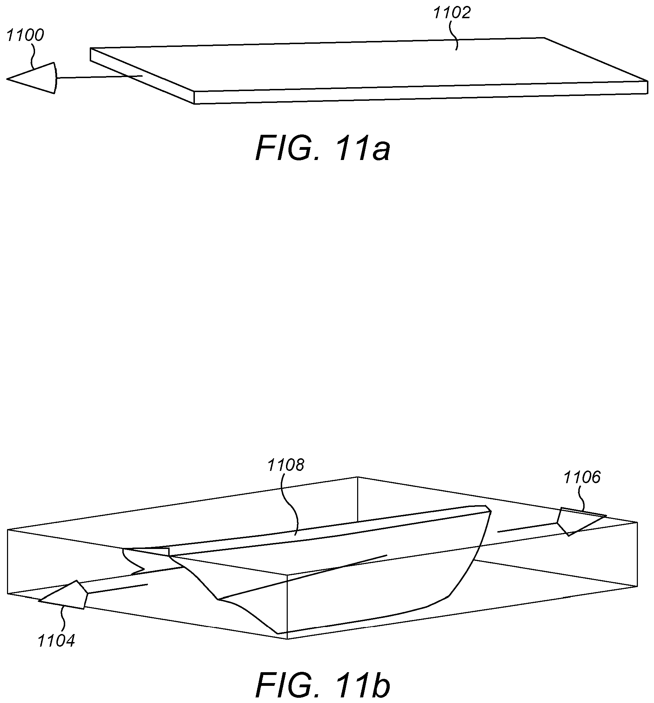

In step 20 so-called "letterbox" candidate pieces are removed. Some candidate pieces are theoretically possible but would not make sense to make, often being very long and thin. Characteristically, these pieces will have one dimension double or greater than double the length of the other two dimensions. Another characteristic of letterbox pieces is this longest dimension will be 0.95 times or greater the length of the scalar projection of the entire piece (the longest possible distance within the bounding box of the model). These "letterbox" mould solutions, such as those seen in Figures 11a and 11b, are removed from the possible mould solution available for a user to select from. Figure 11a shows a pull direction 1100 that creates a very thin, long piece, a letterbox candidate piece 1102, which is difficult for manufacture. Similarly, Figure 11b shows two pull directions 1104, 1106 that creates a thin, complex mould solution 1108 that would not realistically be used to manufacture the design.

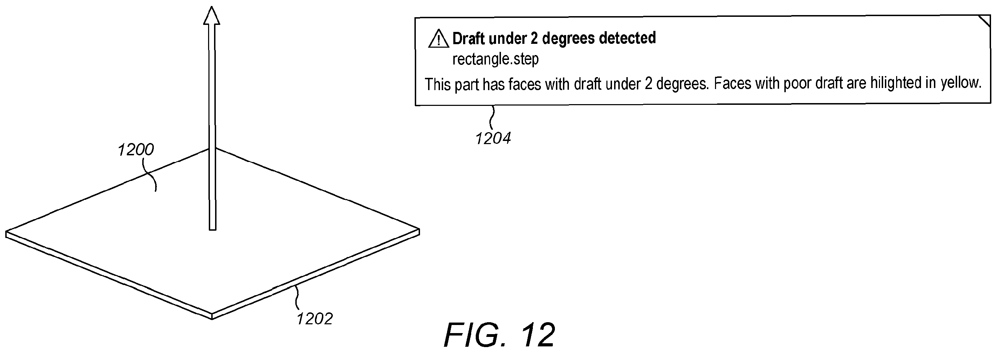

In step 21 of Figure 1, the draft angle is calculated for each face in each candidate piece. This is done by comparing 90° to the normal of each face with the pull direction. The difference in angle is stored for each face, and this difference is the draft of the face. Any faces with a draft angle of 2° or less are considered to have a poor draft angle which is indicated to the user. Parts generally need to have all faces with a draft of at least 2° to be able to remove the piece from the mould. Figure 12 shows a part 1200 for manufacture and the part is to be removed vertically from the mould. The side faces 1202 have a draft of less than 2° compared to the pull direction so could catch on the mould when being removed. Since a face with a draft of less than 2° is detected, an alert 1204 is displayed to the user. Areas with poor draft often require extra mould design to increase the angle.

In step 22 of Figure 1, combinations of candidate pieces that cover the whole mesh are found. These combinations represent mould solutions for the part. All candidate pieces are passed into another function. This function first looks for candidate pieces that cover the whole mesh alone, and labelling these as single-piece mould solutions. This process repeats for pairs of candidate pieces (faces in the mesh are in one or the other or both of the candidate pieces), and these are labe two-piece mould solutions. The same is then done for all triplets of candidate pieces, to find the three-piece mould solutions. Each single, pair or triplet of candidate pieces that cover all the faces of the mesh are stored as a mould solution. The user can then choose whether they want a single-, double- or triple-piece mould. For a single-piece mould, only a single candidate piece is required. For a double-piece mould, two candidate pieces are required. For a triple-piece mould, three candidate pieces are required. The best candidate piece or set of candidate pieces is found by taking the dot products of the direction from the set of directions associated with each candidate piece with every other direction associated with every other candidate piece that together cover the whole mesh and selecting the combination of candidate pieces which result in the lowest dot product. As there will likely be several possible combinations of candidate pieces that together cover the entire mesh, the most preferable candidate pieces are those with pull directions as close to opposite directions to each other as possible, as this is most likely to create a good mould covering all faces and provide easily pulled apart shells. The candidate pieces with their associated pull directions being as close to opposite to each other as possible can be found by taking the dot product of the pull directions associated with each candidate piece. The set of candidate pieces that cover the entire mesh with the lowest dot product can then be returned, or other options can be given to the user including the single-piece solution.

Instead of using the dot product, the scalar projection of the pull direction may be compared with a vector of the size of the bounding box of the model, which returns the candidate pieces with fewest letterbox pieces.

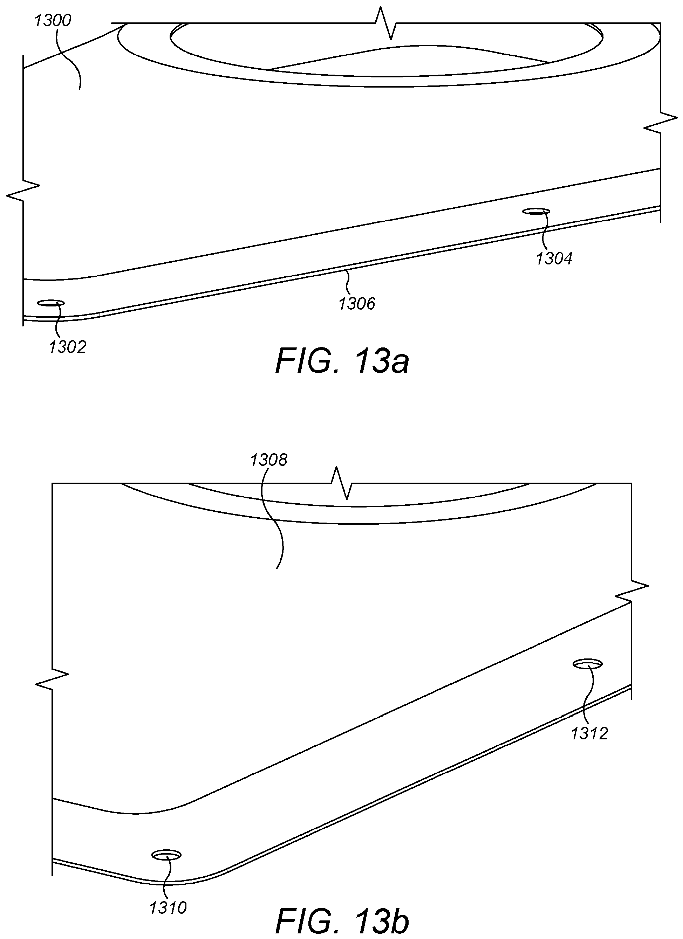

In step 23, each multi-piece solution is trimmed so that there's a male mould piece and cutout and hole faces are removed. Single-piece solutions are trimmed to remove cutout and hole faces. Each multi-piece mould solution is trimmed so that there is no overlap between the candidates that make up the mould solution. This is done so that there is no overlap between each piece in a multi-piece mould, and so that the user has a choice between male and female moulds in single piece solutions. Figure 13a shows a single-piece mould solution. Surface 1300 is the single side to be moulded, with holes 1302, 1304 to be cut out and a parting line 1306. The parting line is where the different shells of the mould come together. This line can mark the border between the inside and outside of the part on a single-piece solution. Figure 13b shows the same input CAD model but for a two-piece mould solution. Surface 1308 is one side of the mould and the opposite side (not shown) will also be moulded. As with Figure 13a, the holes 1310, 1312 will be cut out. In Figure 13a, the vertical faces touching parting line 1306 will be in both pieces of a two-piece mould solution, so they will be trimmed from one piece to stop an overlap being formed. This can be seen in the male mould shown in figure 13a, as the side faces are not included in this mould piece. The hole faces are also trimmed from both mould pieces in the two-piece mould solution, as these may not be moulded but can be cut out later.

In step 24, for each multi-piece solution, individual single-piece solutions are generated. This is done by taking one of the pieces from the multi-piece solution and setting it as its own single-piece solution. This allows thin pieces to be made using just one of the shells.

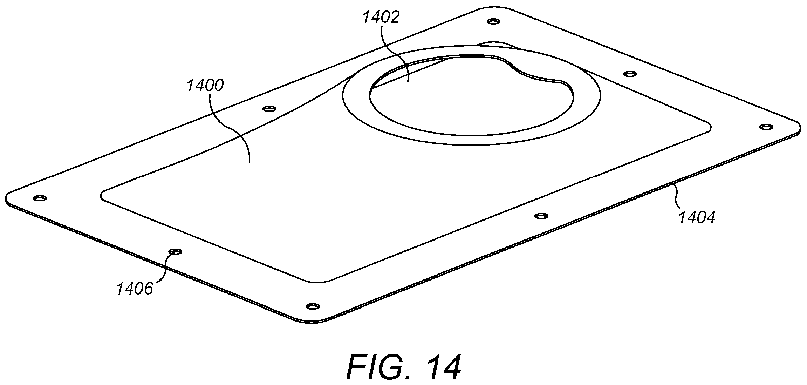

In step 25 of Figure 1 parting lines are generated for each solution. Every border in each candidate piece is classified as either parting lines, holes or cutouts. This is done by looking at edges between the candidate pieces in a multi-piece mould solution or around the edge of a multi-piece solution. Each parting line is identified as either a standard parting line, or a hole or cutout parting line. Figure 14 has a mould solution with face A 1400 and face B 1402 and the standard parting line 1404 between the two. Figure 14 also shows the edges around the holes as hole parting lines 1406.A user can see how the mould pieces will be separated and can identify cutouts and holes.

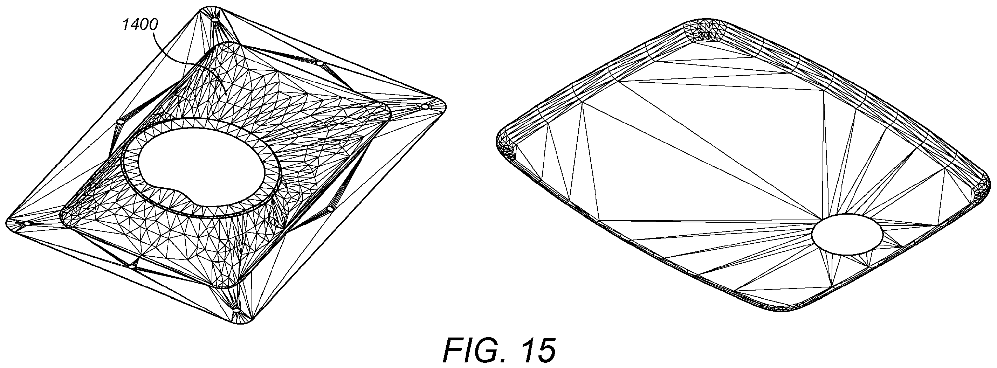

In step 26, for each candidate piece, a mould solid is generated. The mould solid is the candidate piece that will be used by the code for automated mould generation. Figure 15 shows the CAD model of Figure 14 with the mould solid generated, the moulded faces (i.e. the faces of the candidate piece used) of the region having been extracted to generate the mould solid.

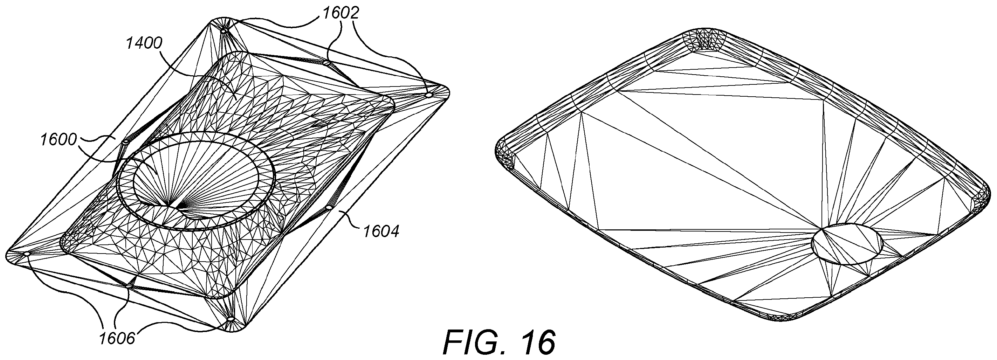

In step 27, the holes and cutouts in the region are triangulated. Thus, the holes and cutouts are filled in by meshing to make one continuous region.This can be seen in Figure 16, with the holes and cutouts 1600, 1602, 1604, 1606 having been identified and filled in in the mesh.

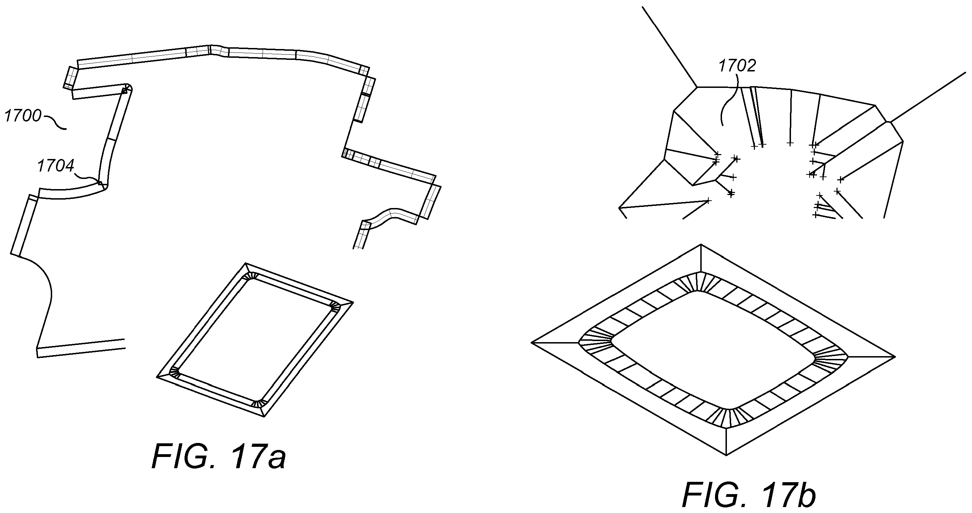

In step 28 of Figure 1, the boundary of the region tangent to the surface is extended outwards. The boundary may be concave as viewed from the pull direction so simply extruding the boundary in equal amounts directly outwards will cause the boundary to self-intersect. To combat this, a straight skeleton of boundary points is computed to obtain "opposite" vertices for each vertex in the boundary. A straight skeleton is a geometric representation of a polygon by a topological skeleton. This process can be seen in Figures 17a and 17b. In Figure 17a, extrusion would lead to the self-intersection (1704) in the concave region 1700, so the skeleton 1702 is formed in Figure 17b, preventing this self-intersection and allowing the boundary of the region tangent to the surface to be extended outwards. The skeleton shown in Figure 17b is effectively an expanded version of the boundary shown in Figure 17a, the outline of the boundary being visible in the middle.

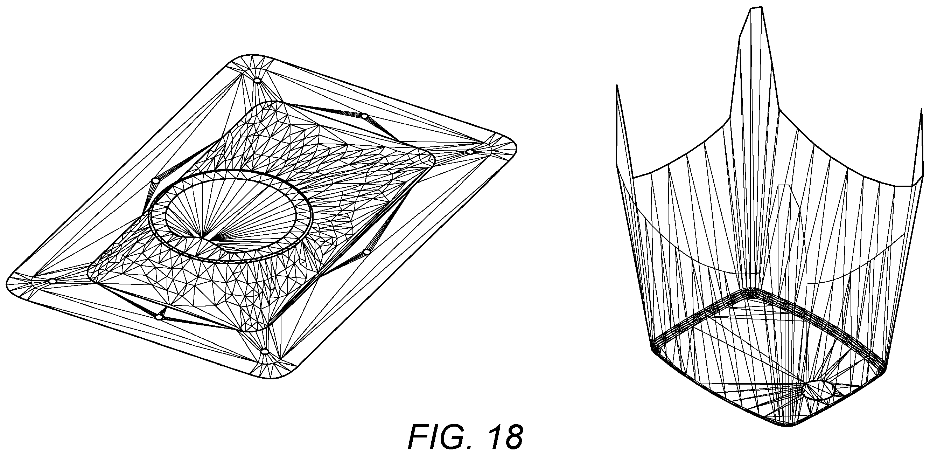

In step 29, the boundary is lofted (a process of creating a 3D solid or surface between two or more cross-sections) towards the straight skeleton using corresponding vertices on each of the boundary and straight skeleton. As can be seen from Figure 18, this ensures the faces are tangent to the surface where they meet the moulded region.

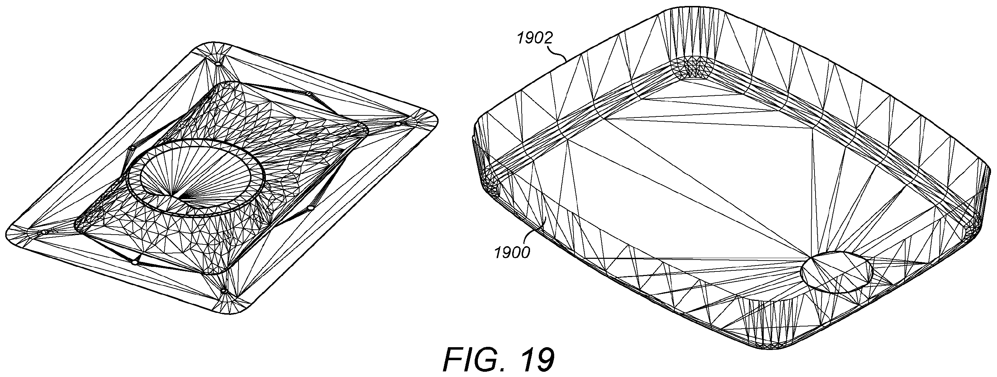

In step 30, the lofted faces are clipped in the pull direction. Figure 19 shows the input CAD model of figure 14 having been through the previous steps. Clipping the extruded faces 1900 forms a flat boundary 1902 to match the run-off desired by the user. The run-off defines how much larger the mould is than the part to be moulded. This may be selected by a user prior to carrying out the process on an input CAD model. A suitable default value for run-off may be 25mm.

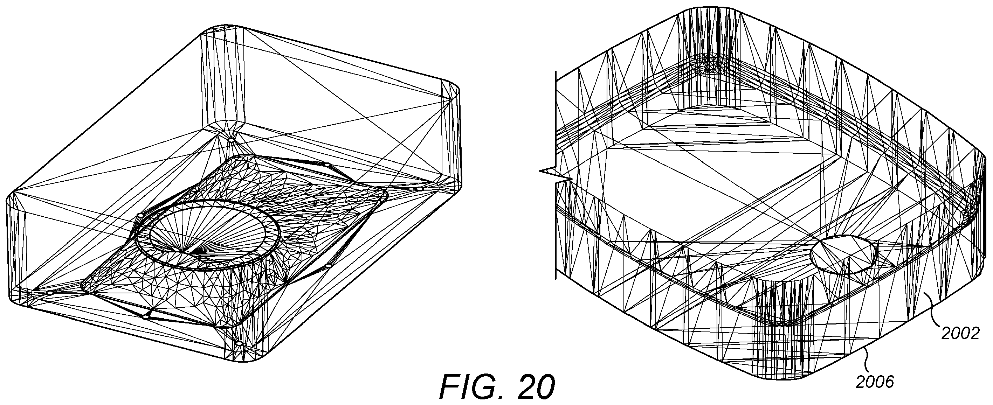

In step 31, the surface is extruded along the pull direction related to the selected mould piece. Extruding down and triangulating creates a new base will completes the final solid mould. Figures 20a and 20b show the surfaces 2000, 2002 extruded downwards along the pull direction to create a new boundary which is then triangulated to form the base 2006 that will create the final solid mould.

Figure 21 shows an exemplary computer system which can be used to put the method described above into effect. The system comprises a computer 2100 comprising at least a processor 2102 and a memory 2104, connected to a network 2108. The network may be connected to the Internet. The system may also have a graphical user interface 2106, GUI, to allow for user inputs. The memory 2104 may store instructions, which, when executed by the processor 2102 perform the method as described above.

## Claims

1. A computer-implemented method for generating an output computer-aided design (CAD) model representing a mould for use in moulding a part represented by an input CAD model, the method comprising:
generating a mesh over the external surfaces of the input CAD model;
analysing the mesh to generate a visibility data structure defining the visibility of each point on the mesh;
for each of a group of three orthogonal axes, identifying and selecting, using the visibility data structure, a set of directions such that every point in the mesh is visible from the set of directions in combination;
for each direction, defining one or more candidate pieces covering the visible regions of the mesh from that direction;
selecting a combination of the candidate pieces which together cover the whole mesh;
dividing the combination of candidate pieces about one or more parting lines into a set of shells; and
generating the output CAD model to include a set of model parts, each of which corresponds to a respective one of the set of shells and has a surface which conforms to the shape of the respective shell.

2. The method of claim 1, further comprising detecting holes in the mesh after generating the mesh.

3. The method of claim 2, further comprising detecting holes in the mesh by:
for each face in the mesh, projecting a ray from the centre of the face in the mesh normal to the face out the mesh;
tagging the face as a hole face if the projected ray intersects another face in the mesh with a normal within a predefined tolerance of opposite to the projected ray, within a predefined distance along the projected ray; and
removing hole face tags from faces that are not in a closed loop of hole faces;
wherein the method optionally further comprises measuring the distance between vertices on each hole face; and
tagging the hole face as a deep hole face when the distance between vertices in the hole face is above a predetermined threshold.

4. The method of any preceding claim, further comprising detection of hollows in the mesh after the mesh is generated, wherein detecting hollows in the mesh optionally comprises:
projecting a plurality of rays from the centre of each face, each ray being projected along a respective one of a plurality of directions;
selecting those faces for which all the projected rays intersect other faces in the mesh; and
tagging the selected faces as internal volume faces.

5. The method of any preceding claim, further comprising:
a) detection of gaps in the mesh smaller than a predefined size, by: projecting a ray normal to and from the centre of each face except those that have already been tagged as a hole face and measuring the distance to a first intersected face; and tagging the face from which the ray was projected as a narrow gap face when the distance is below the predefined size; or
b) detecting walls in the mesh that are thinner than a predefined thickness, by: projecting a ray from each face normal to the face into the mesh and measuring the distance the projected ray travels to the first face the ray intersects; and tagging the face from which the ray was projected as a thin wall face when the distance is below a predetermined threshold; or
c) detecting internal corners in the mesh by: detecting all edges in the mesh; for each detected edge in the mesh, projecting rays from the centre of each of a pair of faces either side of the detected edge normal to the face; and tagging the face as an internal corner face when both rays intersect with other faces in the mesh.

6. The method of any preceding claim, wherein generating the visibility data structure comprises:
for each orthogonal axis, constructing polylines around the perimeter of each of a plurality of cross-sectional slices taken through the mesh, the cross-sectional slices being perpendicular to the orthogonal axis;
for each vertex along the constructed polylines, analysing every angle from 0° to 360°, relative to the orthogonal axis down which the mesh has been sliced to create the polyline, to determine the angles from which the point is obscured by other points in the polyline or by another polyline;
for each point along the constructed polylines, analysing every angle from 0° to 360° relative to an external field to determine the angles from which the point is obscured by another polyline by projecting rays from each point at incremental angles; and
defining, in the data structure, the visibility of each point on each constructed polyline for every angle from 0° to 360° as either visible or obscured, wherein the visibility of each point from each angle is dependent upon whether the analysis found the angle from the point was obscured by other points in the polyline or another polyline.

7. The method of any preceding claim, wherein identifying and selecting, using the visibility data structure, a set of directions from which every point in the mesh is visible for each axis comprises:
identifying all 0° to 180° and 180° to 360° pairs of angles from which every vertex on every analysed polyline for each axis is visible in combination and adding the pairs to the group;
identifying all 0° to 120°, 120° to 240°, 240° to 360° triplets of angles from which every point on the mesh is visible in combination and adding the triplets to the group;
receiving a user-input defining the number of shells wanted for the mould;
and
choosing, from the group, based on the number of shells wanted for the mould, the combination of angles closest to 0°, 90°, 180° or 270°;
wherein the method optionally further comprises rotating the mesh such that the set of directions chosen can be represented by a vector.

8. The method of any preceding claim, further comprising finding visible faces on the mesh for each direction in the set of directions;
wherein finding visible faces on the mesh comprises finding faces with a normal with an angle within a predetermined tolerance of the direction from the set of directions;
projecting rays from the centre of these faces in the chosen direction to analyse whether the face is obstructed by another face in the mesh in the chosen direction;
tagging those that are not obstructed as visible faces; and
identifying faces not tagged as a visible face but are surrounded by visible faces and tagging these faces as isolated faces.

9. The method of claim 8, further comprising rotating the rays projected from the centre of faces in the mesh with a normal within a predefined angle of perpendicular to the direction from the set of directions to create an angle between the normal and perpendicular to the direction from the set of directions greater than the predefined angle, the method optionally further comprising defining the candidate pieces by merging connected visible- or isolated-tagged faces.

10. The method of any preceding claim, further comprising analysing the mesh to find faces with a normal within 2° of the direction in the set of directions and issuing an alert if such a face is found.

11. The method of any preceding claim, further comprising removing faces from one of the candidate pieces that are common with other candidate pieces to generate the parting line where the candidate pieces meet.

12. The method of any of claims 1-10, further comprising generating the parting line using the edge of the candidate piece for a single piece solution.

13. The method of any preceding claim, wherein selecting the combination of the candidate pieces which together cover the whole mesh comprises taking the dot products of the direction from the set of directions associated with each candidate piece with every other direction associated with every other candidate piece that together cover the whole mesh and selecting the combination of candidate pieces which result in the lowest dot product.

14. A method for making a mould comprising generating an output CAD model using the method of any of the preceding claims and operating a reproduction device to produce the mould represented by the output CAD model.

15. The method of any preceding claim, further comprising generating a mould from the output CAD model, wherein generating the mould comprises:
generating a moulding region for each candidate piece;
for each moulding region, filling in gaps in a mesh formed over the surface of the moulding region;
extending the boundary of the moulding region tangential to its surface by lofting the boundary towards a straight skeleton formed from it using corresponding vertices on each of the boundary and straight skeleton; and
extruding the surface along one of the chosen directions.

16. A system comprising at least one processor coupled to a memory, the memory containing instructions which, when executed on the or each processor, cause the or each processor to perform the steps of the method of any of the preceding claims.

17. A computer-readable medium containing instructions for execution on at least one processor, the instructions causing the or each processor, when executed, to perform the steps of the method any of claims 1 to 15.

## Patentansprüche

1. Computerimplementiertes Verfahren zum Erzeugen eines Ausgabemodells für computergestütztes Design (CAD), das eine Form zur Verwendung beim Formen eines Teils darstellt, das durch ein CAD-Eingabemodell repräsentiert wird, wobei das Verfahren Folgendes umfasst:
Erzeugen eines Netzes über die Außenflächen des CAD-Eingabemodells;
Analysieren des Netzes, um eine Sichtbarkeitsdatenstruktur zu erzeugen, die die Sichtbarkeit jedes Punkts auf dem Netz definiert;
für jede einer Gruppe von drei orthogonalen Achsen, Identifizieren und Auswählen, unter Verwendung der Sichtbarkeitsdatenstruktur, eines Satzes von Richtungen, so dass jeder Punkt in dem Netz aus dem Satz von Richtungen in Kombination sichtbar ist;
für jede Richtung, Definieren eines oder mehrerer Kandidatenstücke, die die sichtbaren Bereiche des Netzes aus dieser Richtung abdecken;
Auswählen einer Kombination der Kandidatenstücke, die zusammen das gesamte Netz abdecken;
Aufteilen der Kombination von Kandidatenstücken um eine oder mehrere Trennlinien in einen Satz von Schalen; und
Erzeugen des CAD-Ausgabemodells, um einen Satz von Modellteilen zu beinhalten, von denen jedes einer jeweiligen des Satzes von Schalen entspricht und eine Oberfläche aufweist, die der Form der jeweiligen Schale entspricht.

2. Verfahren nach Anspruch 1, ferner umfassend das Detektieren von Löchern in dem Netz nach dem Erzeugen des Netzes.

3. Verfahren nach Anspruch 2, ferner umfassend das Detektieren von Löchern in dem Netz durch Folgendes:
für jede Fläche im Netz, Projizieren eines Strahls von der Mitte der Fläche im Netz senkrecht zu der Fläche aus dem Netz;
Kennzeichnen der Fläche als Lochfläche, falls der projizierte Strahl eine andere Fläche in dem Netz mit einer Normalen innerhalb einer vordefinierten Toleranz gegenüber dem projizierten Strahl innerhalb einer vordefinierten Distanz entlang des projizierten Strahls schneidet; und
Entfernen von Lochflächenkennzeichnungen von Flächen, die sich nicht in einer geschlossenen Schleife von Lochflächen befinden;
wobei das Verfahren optional ferner das Messen des Abstands zwischen Scheitelpunkten auf jeder Lochfläche umfasst; und
Kennzeichnen der Lochfläche als tiefe Lochfläche, wenn der Abstand zwischen Scheitelpunkten in der Lochfläche über einem vorbestimmten Schwellenwert liegt.

4. Verfahren nach einem der vorhergehenden Ansprüche, das ferner das Detektieren von Vertiefungen in dem Netz umfasst, nachdem das Netz erzeugt wurde, wobei das Detektieren von Vertiefungen in dem Netz optional Folgendes umfasst:
Projizieren mehrerer Strahlen von der Mitte jeder Fläche, wobei jeder Strahl entlang einer jeweiligen einer Vielzahl von Richtungen projiziert wird;
Auswählen der Flächen, für die alle projizierten Strahlen andere Flächen im Netz schneiden; und
Kennzeichnen der ausgewählten Flächen als interne Volumenflächen.

5. Verfahren nach einem der vorhergehenden Ansprüche, das ferner Folgendes umfasst:
a) Erkennen von Lücken in dem Netz, die kleiner als eine vordefinierte Größe sind, durch Folgendes: Projizieren eines Strahls senkrecht zu und von der Mitte jeder Fläche, mit Ausnahme derjenigen, die bereits als Lochfläche gekennzeichnet wurden, und Messen des Abstands zu einer ersten Schnittfläche; und Kennzeichnen der Fläche, von der der Strahl projiziert wurde, als eine schmale Spaltfläche, wenn der Abstand unter der vordefinierten Größe liegt; oder
b) Detektieren von Wänden in dem Netz, die dünner als eine vordefinierte Dicke sind, durch Folgendes: Projizieren eines Strahls von jeder Fläche senkrecht zu der Fläche in das Netz und Messen des Abstands, den der projizierte Strahl zu der ersten Fläche durchläuft, die der Strahl schneidet; und Kennzeichnen der Fläche, von der der Strahl projiziert wurde, als eine dünne Wandfläche, wenn der Abstand unter einem vorbestimmten Schwellenwert liegt; oder
c) Erkennen innerer Ecken im Netz durch Folgendes: Erkennen aller Kanten im Netz; Projizieren von Strahlen von der Mitte jeder Fläche eines Paares von Flächen zu beiden Seiten der erkannten Kante senkrecht zur Fläche für jede erkannte Kante; und Kennzeichnen der Fläche als innere Eckfläche, wenn beide Strahlen sich mit anderen Flächen im Netz schneiden.

6. Verfahren nach einem der vorhergehenden Ansprüche, wobei das Erzeugen der Sichtbarkeitsdatenstruktur Folgendes umfasst:
für jede orthogonale Achse, Konstruieren von Polylinien um den Umfang von jeder von mehreren Querschnittsscheiben, die durch das Netz genommen werden, wobei die Querschnittsscheiben senkrecht zu der orthogonalen Achse sind;
für jeden Scheitelpunkt entlang der konstruierten Polylinien, Analysieren jedes Winkels von 0° bis 360°, bezogen auf die orthogonale Achse, entlang derer das Netz geschnitten wurde, um die Polylinie zu erstellen, um die Winkel zu bestimmen, aus denen der Punkt durch andere Punkte in der Polylinie oder durch eine andere Polylinie verdeckt wird;
für jeden Punkt entlang der konstruierten Polylinien, Analysieren jedes Winkels von 0° bis 360° relativ zu einem externen Feld, um die Winkel zu bestimmen, von denen aus der Punkt von einer anderen Polylinie verdeckt wird, indem Strahlen von jedem Punkt in inkrementellen Winkeln projiziert werden; und
Definieren, in der Datenstruktur, der Sichtbarkeit jedes Punkts auf jeder konstruierten Polylinie für jeden Winkel von 0° bis 360° als entweder sichtbar oder verdeckt, wobei die Sichtbarkeit jedes Punkts aus jedem Winkel davon abhängt, ob die Analyse fand, dass der Winkel von dem Punkt durch andere Punkte in der Polylinie oder eine andere Polylinie verdeckt wurde.

7. Verfahren nach einem der vorhergehenden Ansprüche, wobei das Identifizieren und Auswählen, unter Verwendung der Sichtbarkeitsdatenstruktur, eines Satzes von Richtungen, aus denen jeder Punkt in dem Netz für jede Achse sichtbar ist, Folgendes umfasst:
Identifizieren aller Winkelpaare von 0° bis 180° und 180° bis 360°, von denen jeder Scheitelpunkt auf jeder analysierten Polylinie für jede Achse in Kombination sichtbar ist, und Hinzufügen der Paare zu der Gruppe;
Identifizieren aller Winkel-Tripel von 0° bis 120°, 120° bis 240° und 240° bis 360°, von denen aus jeder Punkt des Netzes in Kombination sichtbar ist, und Hinzufügen der Tripel zur Gruppe;
Empfangen einer Benutzereingabe, die die Anzahl der für die Form gewünschten Schalen definiert;
und
Auswählen, aus der Gruppe, basierend auf der Anzahl der gewünschten Schalen für die Form, der Kombination von Winkeln, die am nächsten an 0°, 90°, 180° oder 270° liegen;
wobei das Verfahren optional ferner Drehen des Netzes umfasst, sodass der ausgewählte Satz von Richtungen durch einen Vektor dargestellt werden kann.

8. Verfahren nach einem der vorhergehenden Ansprüche, ferner umfassend das Finden sichtbarer Flächen auf dem Netz für jede Richtung in dem Satz von Richtungen;
wobei das Finden sichtbarer Flächen auf dem Netz das Finden von Flächen mit einer Normalen mit einem Winkel innerhalb einer vorbestimmten Toleranz der Richtung aus dem Satz von Richtungen umfasst;
Projizieren von Strahlen aus der Mitte dieser Flächen in die gewählte Richtung, um zu analysieren, ob die Fläche in der gewählten Richtung durch eine andere Fläche im Netz blockiert wird;
Kennzeichnen von nicht behinderten Flächen als sichtbare Flächen; und
Identifizieren von Flächen, die nicht als sichtbare Fläche gekennzeichnet sind, sondern von sichtbaren Flächen umgeben sind, und Kennzeichnen dieser Flächen als isolierte Flächen.

9. Verfahren nach Anspruch 8, das ferner das Drehen der von der Mitte der Flächen in dem Netz projizierten Strahlen mit einer Normalen innerhalb eines vordefinierten Winkels senkrecht zu der Richtung aus dem Satz von Richtungen umfasst, um einen Winkel zwischen der Normalen und senkrecht zu der Richtung aus dem Satz von Richtungen zu erzeugen, der größer als der vordefinierte Winkel ist, wobei das Verfahren optional ferner das Definieren der Kandidatenstücke durch das Zusammenfügen verbundener als sichtbar oder isoliert gekennzeichneter Flächen umfasst.

10. Verfahren nach einem der vorhergehenden Ansprüche, ferner umfassend das Analysieren des Netzes, um Flächen mit einer Normalen innerhalb von 2° der Richtung in dem Satz von Richtungen zu finden, und Ausgeben eines Alarms, falls eine solche Fläche gefunden wird.

11. Verfahren nach einem der vorhergehenden Ansprüche, ferner umfassend das Entfernen von Flächen von einem der Kandidatenstücke, die mit anderen Kandidatenstücken gemeinsam sind, um die Trennlinie zu erzeugen, wo sich die Kandidatenstücke treffen.

12. Verfahren nach einem der Ansprüche 1-10, ferner umfassend das Erzeugen der Trennlinie unter Verwendung der Kante des Kandidatenstücks für eine Einzelstücklösung.

13. Verfahren nach einem der vorhergehenden Ansprüche, wobei das Auswählen der Kombination der Kandidatenstücke, die zusammen das gesamte Netz abdecken, das Nehmen der Punktprodukte der Richtung aus dem Satz von Richtungen, die mit jedem Kandidatenstück assoziiert sind, mit jeder anderen Richtung, die mit jedem anderen Kandidatenstück assoziiert ist, das zusammen das gesamte Netz abdeckt, und das Auswählen der Kombination von Kandidatenstücken, die zu dem niedrigsten Punktprodukt führen, umfasst.

14. Verfahren zum Herstellen einer Form, umfassend das Erzeugen eines CAD-Ausgabemodells unter Verwendung des Verfahrens nach einem der vorhergehenden Ansprüche und Betreiben einer Reproduktionsvorrichtung zum Erzeugen der Form, die durch das CAD-Ausgabemodell repräsentiert wird.

15. Verfahren nach einem der vorhergehenden Ansprüche, das ferner das Erzeugen einer Form aus dem CAD-Ausgabemodell umfasst, wobei das Erzeugen der Form Folgendes umfasst:
Erzeugen eines Formbereichs für jedes Kandidatenstück;
für jeden Formbereich, Auffüllen von Lücken in einem über der Oberfläche des Formbereichs gebildeten Netz;
Erweitern der Begrenzung des Formbereichs tangential zu seiner Oberfläche durch Lofting der Begrenzung in Richtung eines geraden Skeletts, das daraus gebildet wird, unter Verwendung entsprechender Scheitelpunkte an jeder der Begrenzung und des geraden Skeletts; und
Extrudieren der Oberfläche entlang einer der gewählten Richtungen.

16. System, das mindestens einen Prozessor umfasst, der mit einem Speicher gekoppelt ist, wobei der Speicher Anweisungen enthält, die, wenn sie auf dem oder jedem Prozessor ausgeführt werden, bewirken, dass der oder jeder Prozessor die Schritte des Verfahrens nach einem der vorhergehenden Ansprüche durchführt.

17. Computerlesbares Medium, das Anweisungen zur Ausführung auf mindestens einem Prozessor enthält, wobei die Anweisungen den oder jeden Prozessor veranlassen, bei Ausführung die Schritte des Verfahrens nach einem der Ansprüche 1 bis 15 durchzuführen.

## Revendications

1. Procédé, mis en œuvre par ordinateur, de génération d'un modèle de conception assistée par ordinateur (CAO) de sortie représentant un moule destiné à être utilisé dans le moulage d'une pièce représentée par un modèle CAO d'entrée, le procédé comprenant :
la génération d'un maillage par-dessus les surfaces externes du modèle CAO d'entrée ;
l'analyse du maillage pour générer une structure de données de visibilité définissant la visibilité de chaque point sur le maillage ;
pour chacun d'un groupe de trois axes orthogonaux, l'identification et la sélection, à l'aide de la structure de données de visibilité, d'un ensemble de directions de telle sorte que chaque point dans le maillage soit visible depuis l'ensemble de directions en combinaison ;
pour chaque direction, la définition d'un ou de plusieurs morceaux candidats couvrant les régions visibles du maillage depuis cette direction ;
la sélection d'une combinaison des morceaux candidats qui, ensemble, couvrent le maillage tout entier ;
la division, en un ensemble de coquilles, de la combinaison de morceaux candidats par rapport à une ou plusieurs lignes de joint ; et
la génération du modèle CAO de sortie pour inclure un ensemble de parties de modèle, dont chacune correspond à une coquille respective parmi l'ensemble de coquilles et présente une surface qui épouse la forme de la coquille respective.

2. Procédé selon la revendication 1, comprenant en outre la détection de trous dans le maillage après la génération du maillage.

3. Procédé selon la revendication 2, comprenant en outre la détection de trous dans le maillage par :
pour chaque face dans le maillage, la projection d'un rayon depuis le centre de la face du maillage normalement à la face extérieure dans le maillage ;
l'étiquetage de la face comme une face à trou si le rayon projeté coupe une autre face dans le maillage avec une normale opposée, à une tolérance prédéfinie près, au rayon projeté, et à une distance prédéfinie près le long du rayon projeté ; et
l'élimination des étiquettes de face à trou de faces qui n'appartiennent pas à une boucle fermée de faces à trou ;
le procédé comprenant en outre facultativement la mesure de la distance entre des sommets sur chaque face à trou ; et
l'étiquetage de la face du trou comme une face à trou profond lorsque la distance entre des sommets de la face à trou est supérieure à un seuil prédéterminé.

4. Procédé selon l'une quelconque des revendications précédentes, comprenant en outre la détection de creux dans le maillage après que le maillage a été généré, la détection de creux dans le maillage comprenant facultativement :
la projection d'une pluralité de rayons depuis le centre de chaque face, chaque rayon étant projeté le long d'une direction respective parmi une pluralité de directions ;
la sélection des faces pour lesquelles tous les rayons projetés coupent d'autres faces dans le maillage ; et
l'étiquetage des faces sélectionnées comme des faces à volume interne.

5. Procédé selon l'une quelconque des revendications précédentes, comprenant en outre :
a) la détection d'espaces dans le maillage plus petits qu'une taille prédéfinie, par : la projection d'un rayon normalement à chaque face et depuis son centre, sauf celles qui ont déjà été étiquetées comme une face à trou, et la mesure de la distance jusqu'à une première face coupée ; et l'étiquetage de la face depuis laquelle le rayon a été projeté comme une face à espace étroit lorsque la distance est inférieure à la taille prédéfinie ; ou
b) la détection de parois dans le maillage qui sont plus minces qu'une épaisseur prédéfinie, par : la projection d'un rayon depuis chaque face normalement à la face dans le maillage et la mesure de la distance parcourue par le rayon projeté jusqu'à la première face coupée par le rayon ; et l'étiquetage de la face depuis laquelle le rayon a été projeté comme une face à paroi mince lorsque la distance est inférieure à un seuil prédéterminé ; ou
c) la détection de coins internes dans le maillage par : la détection de toutes les arêtes dans le maillage ; pour chaque arête détectée dans le maillage, la projection de rayons depuis le centre de chacune d'une paire de faces de part et d'autre de l'arête détectée normalement à la face ; et l'étiquetage de la face comme une face à coin interne lorsque les deux rayons coupent d'autres faces dans le maillage.

6. Procédé selon l'une quelconque des revendications précédentes, dans lequel la génération de la structure de données de visibilité comprend :
pour chaque axe orthogonal, la construction de polylignes autour du périmètre de chacune d'une pluralité de tranches en coupe transversale réalisées à travers le maillage, les tranches en coupe transversale étant perpendiculaires à l'axe orthogonal ;
pour chaque sommet le long des polylignes construites, l'analyse de chaque angle de 0° à 360°, par rapport à l'axe orthogonal le long duquel le maillage a été tranché pour créer la polyligne, afin de déterminer les angles depuis lesquels le point est masqué par d'autres points de la polyligne ou par une autre polyligne ;
pour chaque point le long des polylignes construites, l'analyse de chaque angle de 0° à 360° par rapport à un champ externe afin de déterminer les angles depuis lesquels le point est masqué par une autre polyligne par projection de rayons depuis chaque point à des angles incrémentaux ; et
la définition, dans la structure de données, de la visibilité de chaque point sur chaque polyligne construite pour chaque angle de 0° à 360° comme visible ou masquée, la visibilité de chaque point depuis chaque angle dépendant du fait que l'analyse a déterminé ou non l'angle depuis lequel le point était masqué par d'autres points dans la polyligne ou une autre polyligne.

7. Procédé selon l'une quelconque des revendications précédentes, dans lequel l'identification et la sélection, à l'aide de la structure de données de visibilité, d'un ensemble de directions depuis lequel chaque point dans le maillage est visible pour chaque axe comprend :
l'identification de toutes les paires d'angles de 0 à 180° et de 180° à 360° depuis lesquelles chaque sommet sur chaque polyligne analysée pour chaque axe est visible en combinaison et l'ajout des paires au groupe ;
l'identification de tous les triplets d'angles de 0° à 120°, de 120° à 240°, de 240° à 360° depuis lesquels chaque point sur le maillage est visible en combinaison et l'ajout des triplets au groupe ;
la réception d'une entrée utilisateur définissant le nombre de coquilles souhaitées pour le moule ;
et
le choix, dans le groupe, sur la base du nombre de coquilles souhaitées pour le moule, de la combinaison d'angles se rapprochant le plus de 0°, 90°, 180° ou 270° ;
le procédé comprenant en outre facultativement la rotation du maillage de manière à permettre la représentation de l'ensemble de directions choisi par un vecteur.

8. Procédé selon l'une quelconque des revendications précédentes, comprenant en outre la détermination de faces visibles sur le maillage pour chaque direction parmi l'ensemble de directions ;
la détermination de faces visibles sur le maillage comprenant la détermination de faces avec une normale avec un angle à une tolérance prédéterminée près de la direction parmi l'ensemble de directions ;
la projection de rayons depuis le centre de ces faces dans la direction choisie afin d'analyser si la face est ou non masquée par une autre face dans le maillage dans la direction choisie ;
l'étiquetage de celles qui ne sont pas masquées comme des faces visibles ; et
l'identification des faces qui ne sont pas étiquetées comme une face visible mais qui sont entourées par des faces visibles, et l'étiquetage de ces faces comme des faces isolées.

9. Procédé selon la revendication 8, comprenant en outre la rotation des rayons projetés depuis le centre de faces dans le maillage avec une normale située à un angle prédéfini près de la perpendiculaire à la direction parmi l'ensemble de directions pour créer un angle entre la normale et la perpendiculaire à la direction parmi l'ensemble de directions supérieur à l'angle prédéfini, le procédé comprenant en outre facultativement la définition des morceaux candidats par fusion de faces connectées étiquetées comme visibles ou isolées.

10. Procédé selon l'une quelconque des revendications précédentes, comprenant en outre l'analyse du maillage afin de déterminer des faces avec une normale à 2° près de la direction parmi l'ensemble de directions et l'émission d'une alerte si une telle face est déterminée.

11. Procédé selon l'une quelconque des revendications précédentes, comprenant en outre l'élimination des faces de l'un des morceaux candidats qui sont communes à d'autres morceaux candidats afin de générer la ligne de joint où les morceaux candidats se rencontrent.

12. Procédé selon l'une quelconque des revendications 1 à 10, comprenant en outre la génération de la ligne de joint à l'aide de l'arête du morceau candidat pour une solution en une seule pièce.

13. Procédé selon l'une quelconque des revendications précédentes, dans lequel la sélection de la combinaison des morceaux candidats qui couvrent ensemble le maillage tout entier comprend le calcul des produits scalaires de la direction parmi l'ensemble de directions associée à chaque morceau candidat avec chacune des autres directions associée à chacun des autres morceaux candidats qui couvrent ensemble le maillage tout entier, et la sélection de la combinaison de morceaux candidats qui donne le plus petit produit scalaire.

14. Procédé de fabrication d'un moule comprenant la génération d'un modèle CAO de sortie à l'aide du procédé selon l'une quelconque des revendications précédentes et l'utilisation d'un dispositif de reproduction pour produire le moule représenté par le modèle CAO de sortie.

15. Procédé selon l'une quelconque des revendications précédentes, comprenant en outre la génération d'un moule à partir du modèle CAO de sortie, la génération du moule comprenant :
la génération d'une région de moulage pour chaque morceau candidat ;
pour chaque région de moulage, le comblement des espaces dans un maillage formé par-dessus la surface de la région de moulage ;
l'extension de la frontière de la région de moulage tangentiellement à sa surface par lofting de la frontière vers un squelette droit formé à partir de celle-ci à l'aide de sommets correspondants à la fois sur la frontière et sur le squelette droit ; et
l'extrusion de la surface le long de l'une des directions choisies.

16. Système comprenant au moins un processeur couplé à une mémoire, la mémoire contenant des instructions qui, lorsqu'elles sont exécutées sur le ou chaque processeur, amènent le ou chaque processeur à réaliser les étapes du procédé selon l'une quelconque des revendications précédentes.

17. Support lisible par ordinateur contenant des instructions destinées à s'exécuter sur au moins un processeur, les instructions amenant le ou chaque processeur, lorsqu'elles s'exécutent, à réaliser les étapes du procédé selon l'une quelconque des revendications 1 à 15.
